# EUROPEAN PATENT SPECIFICATION

(11) **EP 3 678 588 B1**
(45) Date of publication and mention of the grant of the patent: **11.10.2023**
(21) Application number: 18783171.4
(22) Date of filing: 07.09.2018
(51) Int. Cl.: A61C 7/14, A61C 19/02

(54) **ORTHODONTIC STORAGE AND DISPENSING SYSTEMS AND PACKAGES**
KIEFERORTHOPÄDISCHE AUFBEWAHRUNGS- UND ABGABESYSTEME UND VERPACKUNGEN
SYSTÈMES DE STOCKAGE ET DE DISTRIBUTION ORTHODONTIQUES ET EMBALLAGES

(30) Priority: 07.09.2017 US 201762555474 P
(43) Date of publication of application: 15.07.2020
(73) Proprietor: Ormco Corporation, Brea, CA 92821 (US)
(72) Inventor: KAPEC, Keffrey, Westport CT 06880 (US); NAOI, Yukiko, New York NY 10039 (US); YANG, Weinan, Brooklyn NY 11223 (US); TURETSKY, Jacob, Brooklyn NY 11238 (US); ALAUDDIN, Sammel, Shahrier, Rancho Cucamonga CA 91730 (US); GRANDE, Jessica, Elivier, Placentia, CA 92870 (US); JOHNS, Justin, Noland, Mandeville LA 70448 (US)
(74) Representative: CSY Herts
(86) International application number: PCT/US2018/049894
(87) International publication number: WO 2019/051188

(56) References cited:
- WO-A1-2011/153039
- WO-A1-2016/144896
- US-A- 5 328 363
- US-A1- 2005 016 884
- US-A1- 2005 205 460
- US-A1- 2006 134 580

## Description

### CROSS REFERENCE TO RELATED APPLICATION

This application claims the benefit of U.S. Provisional Patent Application Serial No. 62/555,474 filed on September 7, 2017.

### TECHNICAL FIELD

The present invention relates generally to packaging of dental appliances, particularly orthodontic brackets, and to manufacturing, organizing, distribution, and storage of packages of those brackets in an orthodontist's office prior to use on patients.

### BACKGROUND

In orthodontics, the efficient use of an orthodontist's time is enhanced by preparing the equipment and supplies needed by the orthodontist for a scheduled patient visit in advance of the appointment. The orthodontist may proceed directly to examination or treatment of a patient. The preparation is typically done by a technician or assistant on the orthodontist's staff. As a result, the orthodontist may see more patients in a specified period of time than would be possible if the orthodontist were to personally gather and arrange the needed supplies in advance of each visiting patient.

Orthodontists have a variety of examination or treatment activities, each of which may require different tools or supplies. A common task for an orthodontist is the installation of an orthodontic appliance on a patient. Currently, an effective and widely used orthodontic appliance is an orthodontic bracket. Installation of orthodontic brackets involves the bonding of individual brackets of a set, each specific bracket is bonded to a selected one of the patient's teeth. For such an installation, a set of brackets must be assembled for the orthodontist, along with adhesives, primers, and other chemical substances, plus forceps/tweezers, handheld curing lights, and other tools needed for installation (referred to as bonding) of the bracket on a tooth.

The installation of an orthodontic bracket requires careful selection and placement of each bracket from a supply in the orthodontist's office onto a crown of a patient's tooth in a one-by-one transfer of the brackets from the orthodontist's inventory to the patient. The transfer involves the engagement of a specific bracket for a given tooth and the proper orientation of the bracket for placement on that tooth. In many cases where the brackets are tooth-specific, with each having a geometry specially configured to fit the surface of a tooth and to engage an archwire to exert specific forces on the tooth, an error in the selection of a bracket can be costly in terms of treatment time and loss of treatment quality.

In addition to being tooth specific, the orientation of the bracket on the tooth is of paramount importance. Placement of a bracket on a patient's tooth requires securely holding the bracket, usually with a pair of tweezers designed for that purpose, with the base of the bracket coated with adhesive and oriented for placement against the patient's tooth. Each bracket base may be considered as having four sides, one intended as the gingival side that must face the gum when mounted on the tooth with the opposite intended as the occlusal side which will face the occlusal plane. At right angles to these are the opposite sides intended as the mesial and distal sides, which must face the mesial and distal sides of the tooth, respectively, for proper alignment of an archwire slot relative to an occlusal plane of a respective one of the patient's upper or lower jaw. This requires proper orientation of the bracket in the hand of the orthodontist, with the gingival side facing downward for lower teeth and facing upward for the upper teeth. Correcting misoriented brackets both during and after bonding can also be costly in terms of lost time and money.

Historically, an orthodontist stocks a plurality of brackets for each tooth, which have often been supplied loosely arranged in cases or boxes. Each bracket was retrieved from a respective one of the boxes and oriented for application to the patient's tooth. When the orthodontist undertakes to retrieve brackets from the boxes at chair-side, considerable professional time is consumed, while care must be taken to insure that the correct bracket is retrieved for a given tooth and is oriented correctly to have its pad coated with adhesive and applied to the tooth. The orthodontist will typically stock in their office inventory multiple types of orthodontic brackets from which a set may be selected for treatment for any particular patient.

Use of a set-up tray results in better use of the orthodontist's chair-side time in installing orthodontic brackets. This time has been replaced by technician or assistant time in loading the set-up trays employing many of the same motions and careful attention previously employed by the orthodontist. Set-up trays are usually hand-size trays or cards having compartments or sticky adhesive-coated pad areas to hold the individual appliances in a predetermined arrangement for pick up by the orthodontist at tray side. Set-up trays of the type that not only hold the brackets for the orthodontist but present tooth-specific, single-doses of adhesive for use with each respective bracket are described in U.S. Patents Nos. 6,213,767 and 6,482,003. Simpler set-up trays that hold only the brackets are also common. It is common to allocate significant time and resources to reviewing inventory, planning, ordering, and stocking in any orthodontic practice. Some practices designate up to an entire day each month for a single staff member to orchestrate the above-mentioned inventory management tasks.

The efficiency of orthodontic practice, shortening of bracket installation times, reducing overhead, and the reduction of error during installation can be improved by supplying, handling, and inventorying orthodontic brackets.

WO2011153039 (3M INNOVATIVE PROPERTIES CO) describes orthodontic assemblies and related methods where an adhesive coated orthodontic appliance is received in a container that includes a substrate and a lid having a retaining member. When the lid is closed, the retaining member is complemental to the shape of the appliance and engages with the appliance. By conforming to the shape of the appliance, the retaining member constrains the appliance from shifting in lateral and vertical directions within the container. When the lid is opened, the associated retaining member disengages from the appliance, thereby facilitating user access to the appliance.

US2005016884 (FISCHER DAN E et al) describes an orthodontic bracket packaging kit and system that includes a base tray, a plurality of pedestals for supporting individual orthodontic brackets, and a protective lid. The kit may also include a blister cover fitting over the orthodontic brackets, helping to hold them in place on top of the individual pedestals. The base tray may have an undulating profile defining a lower level and an upper level, along with a tongue raised towards the lower level. The upper level may be used for placement of maxillary brackets, while the lower level may hold mandibular brackets. The pedestals may be arranged along the base tray in a staggered, radial arc arrangement to facilitate manual retrieval of the brackets. The protective cover may be substantially opaque to curing light wavelengths to protect light curable adhesive pre-applied to the individual brackets.

WO2016144896 (3M INNOVATIVE PROPERTIES CO) describes packaged orthodontic assemblies that include a chamber, an orthodontic appliance, and a support structure engaged with the appliance to secure the appliance in the chamber. The support structure can include a post complemental to a partially enclosed passage, typically an arch wire slot, in the appliance body. The support may orient the wall sections of the enclosed passage at an acute angle relative to a chamber side wall.

### SUMMARY

The present invention overcomes the shortcomings and drawbacks of set-up trays and storage systems heretofore known for use in orthodontic practice. While the invention will be described in connection with certain embodiments, it will be understood that the invention is not limited to those embodiments. On the contrary, the invention includes all alternatives, modifications and equivalents as may be included within the spirit and scope of the present invention.

According to the present invention there is provided a storage and dispensing system of orthodontic brackets for use in an orthodontist's office as set out in appended claims 1 to 14.

According to the present invention, a storage and dispensing system of orthodontic brackets for use in an orthodontist's office includes a package that encloses an orthodontic bracket. The package has a base and a cap. The base has a post extending therefrom on which the orthodontic bracket is secured, and the cap includes a blind bore that extends over and surrounds the post and the orthodontic bracket. The cap and the base are configured to form a moisture tight seal therebetween. The cap includes a thread and the base includes a corresponding thread. The thread of the cap engages the thread of the base when the cap is coupled to the base.

In one embodiment, the orthodontic bracket is a precoated orthodontic bracket.

In one embodiment, the base or the cap includes an o-ring and the other of the cap or the base seals in contact with the o-ring when the cap is coupled to the base.

In one embodiment, the package is resealable to form the moisture tight seal.

In one embodiment, the base has a rectangular configuration having a gingival side, a mesial side, an occlusal side, and a distal side and the orthodontic bracket has a gingival side, a mesial side, an occlusal side, and a distal side, and each of the base sides is aligned with a corresponding one of the orthodontic bracket sides.

In one embodiment, the base includes attachment member on the post, and the orthodontic bracket is releasably secured to the attachment member.

In one embodiment, the base includes a rod extending from the post, the orthodontic bracket being secured to the rod.

In one embodiment, the base includes a pair of tines that are elastically deformable and the orthodontic bracket is held in position between the tines.

In one embodiment, the base includes a pair of arches of a foam material extending from the base, and the orthodontic bracket is compressed between the arches.

In one embodiment, the package or a plurality of the packages is releasably secured to a strip and the strip includes an RFID tag.

In one embodiment, the storage and dispensing system further includes a pack in which the package or a plurality of the packages is releasably secured to a strip, and the strip includes an RFID tag.

In one embodiment, a cross-section of the base is an irregular polygon.

In one embodiment, the storage and dispensing system further includes a patient setup card having a cutout configured to receive the base of the package.

In one embodiment, the storage and dispensing system further includes a patient setup card having a cutout configured to receive the base of the package in a single orientation.

In one embodiment, the storage and dispensing system further includes a patient set-up card having a plurality of cutouts arranged in groups and a working tray having a plurality of drawers arranged to correspond to the groups and configured to store a plurality of packages.

In one embodiment, the storage and dispensing system further includes a dispenser cabinet having quadrants defined by dividers that correspond to the groups and are configured to store a plurality of packages.

In one embodiment, the storage and dispensing system further includes a pack in which a plurality of the packages are releasably secured to a strip and the strip includes an RFID tag and wherein one of the dispenser cabinet and the working tray includes an RFID reader configured to read information from the RFID tag.

In one embodiment, each of the cap and the base are rigid structures that when assembled, form a light-tight and fluid-tight envelope in which the orthodontic bracket is positioned.

Also described herein is a method of manufacturing orthodontic brackets includes placing a predetermined amount of adhesive on an orthodontic bracket, positioning the precoated orthodontic bracket on a base of a package, and placing a cap over the precoated orthodontic bracket and into contact with the base, the cap and the base forming a seal to prevent ingress of moisture into the package.

Also described herein, the orthodontic bracket has a gingival side, a mesial side, a distal side, and an occlusal side and positioning the orthodontic bracket on the base includes positioning a plurality of precoated orthodontic brackets on a corresponding number of bases, wherein the orientation of each gingival side, mesial side, distal side, and occlusal side of each of the precoated orthodontic brackets relative to each of the corresponding bases is the same.

### BRIEF DESCRIPTION OF THE DRAWINGS

The accompanying drawings, which are incorporated in and constitute a part of this specification, illustrate embodiments of the invention and together with the detailed description given below, serve to explain various aspects of the invention.
Fig. 1 is a perspective view of an orthodontic appliance storage and dispensing system of one embodiment of the invention.
Figs. 2 and 3 are perspective views of a five pack containing five individually packaged precoated orthodontic brackets.
Fig. 4 is a disassembled perspective view of one embodiment of an orthodontic bracket package showing a cap removed to expose a precoated orthodontic bracket.
Fig. 4A is a cross sectional view of the package shown in Fig. 4.
Fig. 5 is a perspective view of a dispenser box shown in Fig. 1 depicting removal of a cartridge to expose 10 five packs of one embodiment of the invention.
Figs. 6A and 6B are enlarged perspective views of cartridges stored in the dispenser box of Fig. 1 with the cartridges partly removed from the dispenser box.
Fig. 7 is a perspective view of a working tray shown in Fig. 1 including a plurality of packages of Fig. 4 of one embodiment of the invention.
Fig. 8 is an enlarged perspective view of the working tray shown in Fig. 7 illustrating restocking of the orthodontic bracket packages into the working tray and removal of an orthodontic bracket package therefrom.
Fig. 9 is a perspective view of a patient set-up card of one embodiment of the invention with the package from Fig. 8 being inserted into a pre-selected location in the set-up card.
Fig. 10 is an enlarged perspective view of a patient set-up card shown in Fig. 1 of one embodiment of the invention.
Fig. 11 is a perspective view of an orthodontic bracket package of one embodiment of the invention.
Fig. 12 is a perspective view of an orthodontic bracket package which does not fall within the scope of the claimed invention.
Fig. 13 is a perspective view of an orthodontic bracket package which does not fall within the scope of the claimed invention.
Figs. 14A, 14B, 15A, 15B, 16A, 16B, 17A, 17B, 18A, 18B, 19A, 19B, 20A, and 20B are schematic views of various attachment members according to embodiments of the invention.
Figs. 21, 22A, 22B, 23, 24, 25, 26, 27, 28, 29A, 29B, 30A, and 30B are images some of which do not depict the claimed invention but are useful for understanding it.
Figs. 31A-31C illustrates holding orientations.
Fig. 32 illustrates access locations.
Fig. 33 illustrates an orthodontic bracket package during use according to one embodiment of the invention.
Figs. 34 and 35 are photographs of one embodiment of the invention.
Figs. 36 and 37 are photographs of one embodiment of the invention.

### DETAILED DESCRIPTION

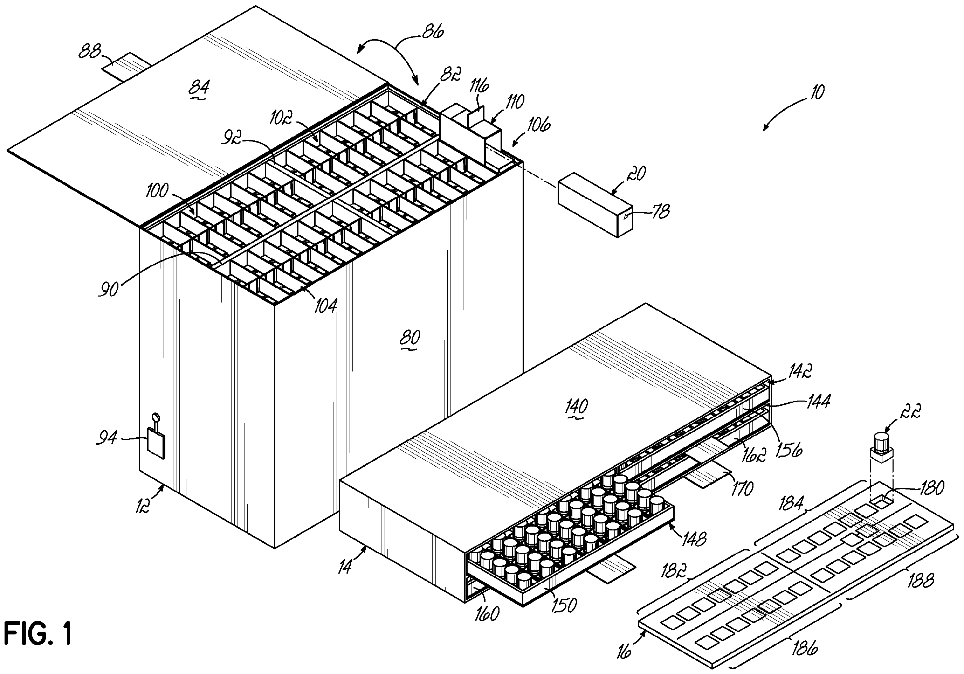

To those and other ends and with reference to Fig. 1, a storage and dispensing system 10 according to one embodiment of the invention is shown. As will be described in detail below, the storage and dispensing system 10 is utilized in an orthodontist's office and facilitates inventory management of orthodontic brackets and organized dispensing of inventoried brackets. Advantageously, the storage and dispensing system 10 reduces or eliminates low inventory issues and errors in bracket ordering. That is, the system 10 reduces errors in the inventory of orthodontic brackets available in the orthodontist's office. Because the inventory of orthodontic brackets in the practitioner's possession is more accurate, the type and number of orthodontic brackets ordered from the orthodontic bracket manufacturer is more accurate. The storage and dispensing system 10 may automatically communicate orthodontic bracket inventory with the orthodontic bracket manufacturer and/or may prompt the orthodontist to place an order or automatically order orthodontic brackets when a low inventory condition is determined. This reduces or eliminates situations in which the lack of availability of an orthodontic bracket prevents orthodontic treatment.

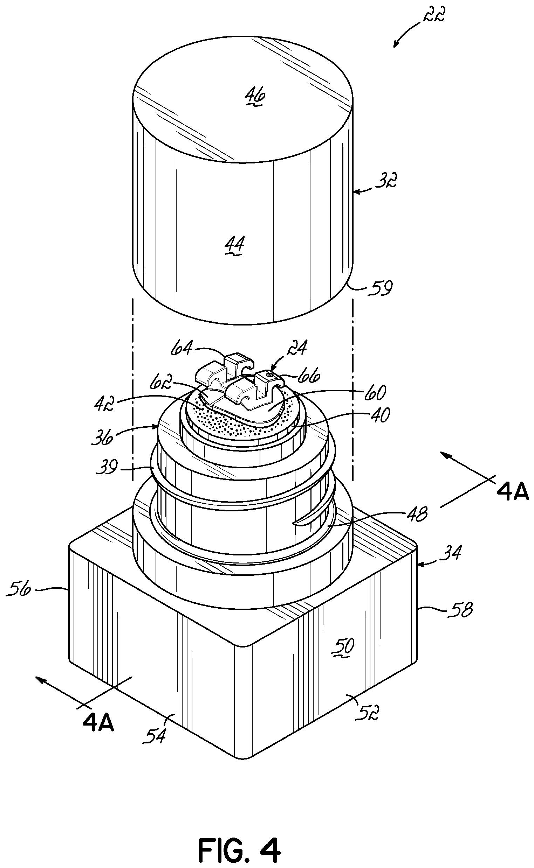

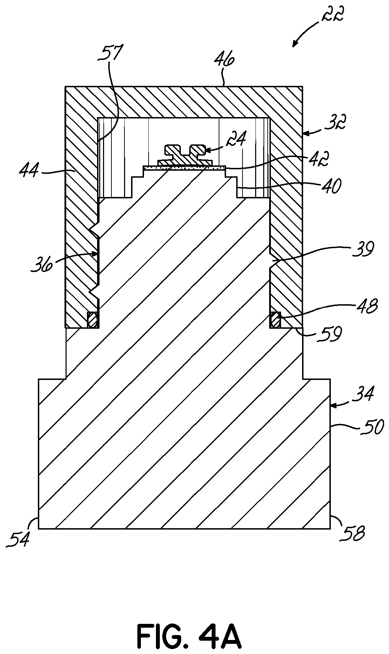

As is described herein, the storage and dispensing system 10 also facilitates accurate placement of each individual orthodontic bracket on each of the patient's teeth. In particular, the storage and dispensing system 10 may improve storage and dispensing of precoated orthodontic brackets (e.g., shown in Fig. 4). For orthodontic treatment of a patient, orthodontic brackets are secured to the patient's teeth with an adhesive. That adhesive may be activated once the orthodontic bracket is pressed against the patient's tooth. In that regard, after the orthodontic bracket is attached to the patient's tooth, the clinician exposes the adhesive to a particular wavelength of light. That light activates the adhesive and begins a curing process that ultimately secures the orthodontic bracket to the patient's tooth. In accordance with alternative arrangements, different types of adhesives can be employed without deviating from the scope of the present invention, for example the adhesive maybe self-curing upon contact with the surface of the patient's tooth thereby removing the need to apply light to the adhesive.

The adhesive may be coated onto the bracket following manufacturing of the orthodontic bracket and prior to delivery of the orthodontic bracket to the orthodontist's office. In this sense, the orthodontic bracket is precoated with adhesive. Precoated brackets save the clinician a significant amount of time because precoating at the manufacturer eliminates application of coating in the office and ensures that an adhesive most suitable for the bracket being provided is employed during installation or bonding to the patient's tooth. Precoating also more accurately positions a predetermined, optimum amount of adhesive on the specific bracket. Because the brackets may be tooth specific, precoating addresses needed variations in the amount of adhesive from bracket to bracket more accurately than an orthodontist can do in the clinical environment. Precoated orthodontic brackets are packaged prior to delivery to the orthodontists to prevent premature activation of the adhesive. An exemplary package is shown in Fig. 4 and described below. Error reduction according to embodiments of the invention may include reducing misorientation and misplacement of precoated orthodontic brackets by controlling the bracket's orientation in an organized and systematic manner throughout the entire process beginning upon receipt of packaged brackets by the orthodontist through placement in the patient set-up card just prior to installation by the orthodontist. In this way, control is provided over the orientation of the package during storage and dispensing of the brackets. The storage and dispensing system 10 enhances efficiency of precoated orthodontic bracket placement and reduces average individual patient chair time. This enables the orthodontist to improve patient throughput.

To those ends, the storage and dispensing system 10 may include multiple storage and dispensing components in the orthodontist's office. In the exemplary embodiment shown in Fig. 1, the storage and dispensing system 10 includes a dispenser cabinet 12, a working tray 14, and a patient set-up card 16 each of which may be placed in a different location in the orthodontist's office. Each of the dispenser cabinet 12, the working tray 14, and the patient set-up card 16 are described in further detail below.

In general, by way of example only, the storage and dispensing system 10 may be wall-mounted or placed on a shelf, such as in a storage closet. The working tray 14 may be placed in a separate room from the dispenser cabinet 12 at a centralized location that is more easily accessible to patient treatment. The patient set-up card 16 is preferably portable. A clinician may transport precoated orthodontic brackets between the working tray 14 and the individual patient chairs with the set-up card 16. Although not shown, the dispensing system 10 may include multiple patient set-up cards 16.

With reference to Figs. 1-3, in one embodiment, the dispenser cabinet 12 is designed to store multiple five packs 20. Each of the five packs 20 contains five individually packaged precoated orthodontic brackets. While embodiments of the present invention are described with regard to five packs of prepackaged orthodontic brackets, embodiments of the present invention are not limited to five packs as other packs may include a different predetermined number of orthodontic brackets. For example, each pack 20 may include from 1 to 10 packaged precoated orthodontic brackets. It may be preferable that the packs 20 include a number of prepackaged orthodontic brackets that may be mathematically advantageous to inventory in situations where the orthodontist or their staff manually tracks inventory. Typically, it is easier to manually track and count total inventory numbers in groups of five or ten rather than in groups of six or seven or another number.

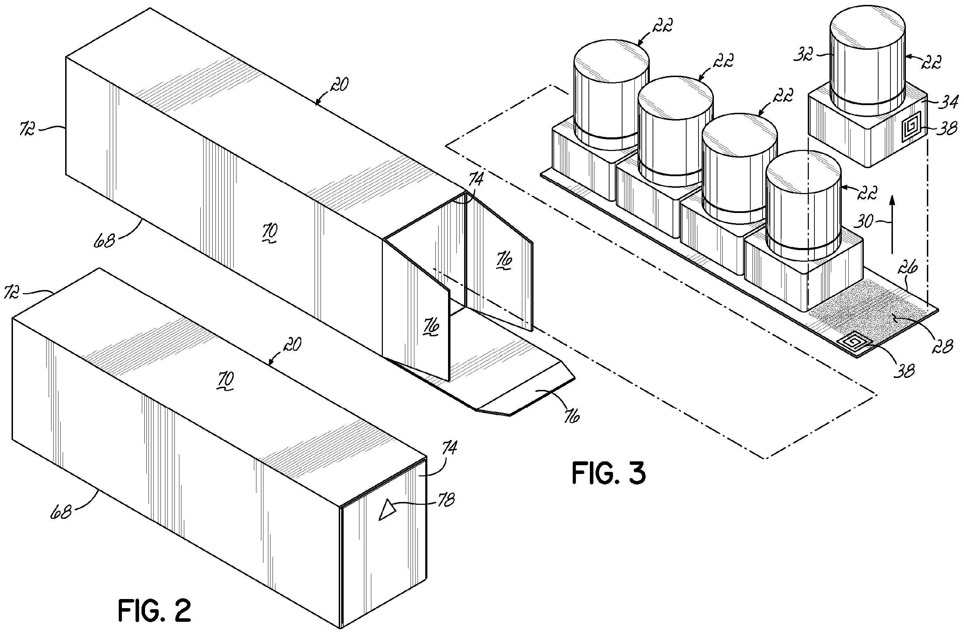

With reference specifically to Figs. 2 and 3, each bracket is contained in a package 22, and each package 22 is releasably secured (as indicated by arrow 30 in Fig. 3) to a strip 26 via an adhesive layer 28. An RFID tag 38 may be contained in the strip 26 (or in each of the individual packages 22) and communicate inventory information with an RFID reader in one or more of the dispenser cabinet 12 and/or the working tray 14 as is described below.

In one embodiment, the clinician may order five packs 20 and store those five packs 20 in the dispenser cabinet 12. As precoated orthodontic brackets are used in treatment, the orthodontist, or a staff member under instruction by the orthodontist, may remove one or more five packs 20 from the dispenser cabinet 12 and take the individual packages 22 from the respective five packs 20 (as is shown in Fig. 3) and place those packages 22 in the working tray 14. From there, the orthodontist may select packages 22 and place those selected ones in the patient set-up card 16 in accordance with a specific arrangement for bracket installation on a patient. Once a set-up card 16 is filled with individual packages 22 for a particular patient, the orthodontist may transport the set-up card 16 to the patient treatment area. It is to be understood that while the actions described herein reference the orthodontist for ease of explanation, in accordance with certain dental practices, the orthodontist may instruct staff members with the selection and stocking of the dispenser cabinet 12, the working tray 14, and the setup card 16.

With reference to Figs. 4 and 4A, in one embodiment, the package 22 contains an adhesive precoated orthodontic bracket 24. The package 22 forms an enclosure which houses the precoated orthodontic bracket 24 in a controlled atmosphere and prevents the ingress of contaminants and light that would deteriorate or otherwise affect the properties of the adhesive on the precoated orthodontic bracket 24. For example, the adhesive that is preapplied to the bracket 24 may contain color-changing properties that are affected by exposure to light, and the controlled atmosphere of the enclosure formed by the package 22 prevents light from preemptively initiating such a color change in the adhesive. The clinician may open the package 22 to remove the orthodontic bracket 24. In that regard, the package 22 includes a cap 32 that is removably secured to a base 34. Removing the cap 32 from the base 34 exposes the precoated orthodontic bracket 24.

As shown, upon removal of the cap 32, the orthodontic bracket 24 is fully exposed and is attached only on one side to the package 22. A post 36 extends from the base 34 with the orthodontic bracket 24 secured to a platform 40 at one end of the post 36. The post 36 has a cross-sectional area that is less than a cross-sectional area of the base 34 and is of a different shape. For example, the post 36 has a circular cross section while the base 34 has a rectangular cross section (e.g., a square). With this configuration of the post 36, the orthodontic bracket 24 is releasably secured at a level well above the location at which the cap 32 forms a seal with the base 34. Taken from another perspective, the cap 32 surrounds the precoated orthodontic bracket 24 and the post 36 and so is greater in dimension than a height of the precoated orthodontic bracket.

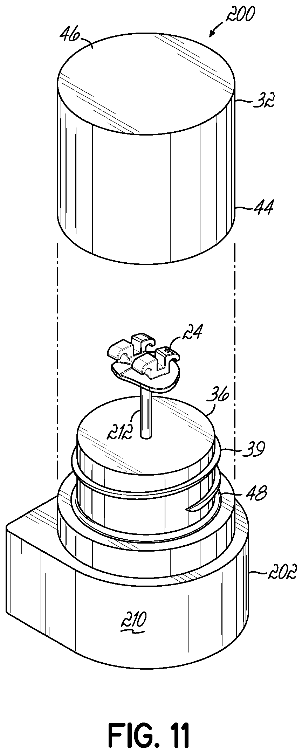

The precoated orthodontic bracket 24 may be releasably secured to the platform 40 by an attachment member, such as an adhesive 42 or by other means some of which are described below in conjunction with Figs. 11-20. Exemplary adhesives are disclosed in U.S. Patent No. 6,183,249. Attachment member can alternatively be a porous substrate having properties that permit both retention of the bracket 24 when in contact therewith, yet enable ease of removal of the bracket 24 when a force is provided to the bracket over a predetermined threshold. The predetermined threshold may be slightly less than a force that may be applied by hand with forceps.

In the exemplary embodiment shown in Figs. 4 and 4A, the base 34 cooperates with the cap 32 to hermetically seal the package 22. The package 22 may be manufactured of a material that is rigid to withstand normal shipping and handling conditions and is light tight. That is, the cap 32 and base 34 block electromagnetic radiation that would cause the adhesive on the precoated bracket 24 to cure or change color prematurely. In one embodiment, the cap 32 and base 34 may be made of the same material. The cap 32 may be flangeless though still form a seal with the base 34.

Once sealed, the package 22 may prevent ingress of moisture and light. In this way, the adhesive of the precoated orthodontic bracket 24 is encapsulated within the package 22 and protected from the environment following its manufacture and during storage. The orthodontist may then remove the precoated orthodontic bracket 24 from the package 22 and place the orthodontic bracket 24 onto the patient's tooth without first applying an adhesive to the orthodontic bracket 24. The adhesive pre-applied on the orthodontic bracket 24 may be a commercially available adhesive, such as, GRE̅NGLOO^{®} orthodontic adhesive available from Ormco Corporation. Embodiments of the present invention are not limited to any particular adhesive.

Not only is the package 22 sealed from the environment to protect the adhesive on the precoated orthodontic bracket 24, in one embodiment the package 22 is resealable. Advantageously, in the event that the orthodontist opens the package 22 only to determine that the orthodontic bracket 24 is not needed for some reason, the orthodontist may then reseal the package 22. Because the package 22 is resealable, the adhesive on the precoated orthodontic bracket 24 may be placed back into a protected environment to extend the shelf life of the adhesive. This allows the orthodontist to utilize the orthodontic bracket 24 on another patient over the course of a few days (e.g., 3 or 4) after the package 22 was initially opened. It will be appreciated that once the adhesive on the precoated orthodontic bracket 24 is exposed to moisture, light, or contaminants, it may gradually cure to a point at which it will not form a sufficiently strong bond with a tooth. At this point, the bracket would no longer be usable. As such, clinicians avoid this situation. By way of example only, the package 22 may be sealed via an O-ring 48 on the post 36 or at another location that cooperates with the cap 32 to hermetically seal the cap 32 to the base 34. Other resealable seals may be formed between the base 34 and the cap 32. In one embodiment, the post 36 may include a thread 39, such as a quarter-turn thread, that cooperates with a similar thread on the cap 32. The thread 39 allows the clinician to easily reseal the cap 32 to the base 34 so that the precoated orthodontic bracket 24 may be stored for later use. The package 22 may be designed for a specific size of five pack 20 and may be easily removed from that pack 20.

In that regard, the cap 32 includes a sidewall 44 and an end wall 46. As shown in Fig. 4, the sidewall 44 defines a cylindrical shaped cap and has a circular end wall 46. As shown in Fig. 4A, the cap 32 includes a blind bore 57 that extends from an open end 59 of the cap 32 toward the end wall 46. The blind bore 57 is sized to receive the post 36 while allowing a void space between the post 36 and the cap 32 that houses the precoated bracket 24 (best shown in Fig. 4A).

With continued reference to the package 22 shown in Figs. 4 and 4A, the base 34 of the package 22 includes a sidewall 50 that generally defines a rectangular base. In the exemplary embodiment, the rectangular base is a square. As is shown in Fig. 3, the base 34 on each of the packages 22 may be packed side to side on the strip 26. This may allow for efficient utilization of space, aid in preventing movement of packages 22 within the five pack 20, and minimize the size of the five pack 20. Adjacent caps 32 are, however, spaced apart by virtue of their cylindrical shapes. This allows the orthodontist to more easily grasp the cap 32 to remove the package 22 from the adhesive layer 28. The square base 34 shown in Fig. 4 includes a mesial side 52, an occlusal side 54, a distal side 56, and a gingival side 58. The orthodontic bracket 24 may be aligned with the sides 50, 52, 54, and 56. By way of example only, the orthodontic bracket 24 has a mesial side 60, an occlusal side 62, a distal side 64, and a gingival side 66. The sides 60, 62, 64, and 66 may be aligned in the same direction as the corresponding sides 52, 54, 56, and 58 of the base 34 when the precoated orthodontic bracket 24 is positioned on the pressure sensitive adhesive 42 during packaging and prior to placement of the cap 32 on the base 34. In this way, the orientation of the package 22 in the patient set-up card 16 may simplify the clinician's manipulation of the precoated orthodontic bracket 24 prior to placement on the tooth. As is described below with reference to the additional configurations of the package 22, the package 22 may be shaped to provide a visual confirmation that it is properly oriented in the patient set-up card 16. It will be appreciated that the base 34 and the cap 32 may have other configurations. An exemplary configuration is described below with reference to Fig. 11.

With reference to Figs. 2 and 3, once all the packages 22 are adhered to the adhesive layer 28, the assembled strip 26 may be inserted into a sleeve or container 68 to form the five pack 20 for shipment to the orthodontist. The container 68 may be specifically designed to receive the five packages 22 on the strip 26. In that regard, the container 68 includes a sidewall 70 and opposing ends 72, 74 that generally conform to the dimensions of the five packages 22 on the strip 26. As shown, the side wall 70 defines a rectangular volume with ends 72, 74 enclosing the rectangular volume. At least one of the ends 72, 74 includes one or more flaps 76 that are contiguous with the sidewall 70 and are movable so as to open or close the five pack 20 and allow the packages 22 to be withdrawn from within or inserted into the container 68. Alternatively, the container 68 may have one or more perforated lines at which the sidewall 70 is structurally weakened and at which the clinician can tear the container 68 to withdrawal one or more packages 22. Although not shown, indicia indicating the type of bracket and adhesive as well as other information may be printed on the side wall 70 for visual inspection.

In one embodiment, an indicator 78 may be printed on one or both ends 72, 74 that indicates the orientation of the packages 22 inside the five pack 20. That indicator 78 allows the clinician to position the five pack 20 in the dispenser cabinet 12 during storage and during transfer to the working tray 14. It will be appreciated that when the packs 20 are oriented in the same direction the relative locations of the RFID tag 38 on each of the strips 26 are more uniformly spaced in the dispenser cabinet 12.

With reference now to Figs. 1, 5, 6A, and 6B, the dispenser cabinet 12 is a generally rectangular cuboid having a sidewall 80 that defines an open end 82. A lid 84 is hinged along one edge of the open end 82 of the sidewall 80 and includes a pull tab 88. The lid 84 may be opened and closed according to arrow 86 to cover the open end 82. The internal volume of the dispenser cabinet 12 may be divided into quadrants by dividers 90, 92. In the exemplary embodiment, quadrants 100, 102, 104, and 106 are defined by the dividers 90, 92.

An RFID reader 94 may be attached to or housed within the sidewall 80. The RFID reader 94 tracks each of the individual RFID tags 38 in the strips 26 and/or in the packages 22. The RFID reader 94 may then communicate the information obtained from the RFID tags 38 to a computer system (not shown) in the orthodontist's office. An exemplary commercially available RFID reader and tag are commercially available from Feig Electronic GmbH or Terso Solutions, Inc. of Madison, Wisconsin. Information gathered from the RFID tags 38 may provide the orthodontist with inventory, consumption, and ordering information. Additionally, misplacement of five packs 20 and/or packages 22 within the dispenser cabinet 12 and working tray 14 may be detected and so problems associated with that misplacement may be corrected or avoided.

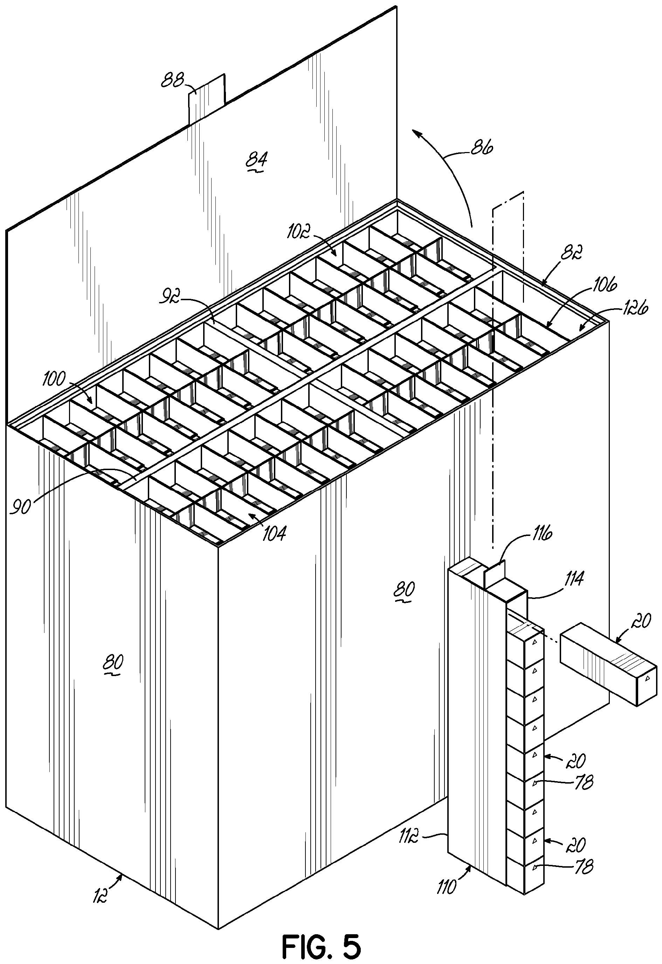

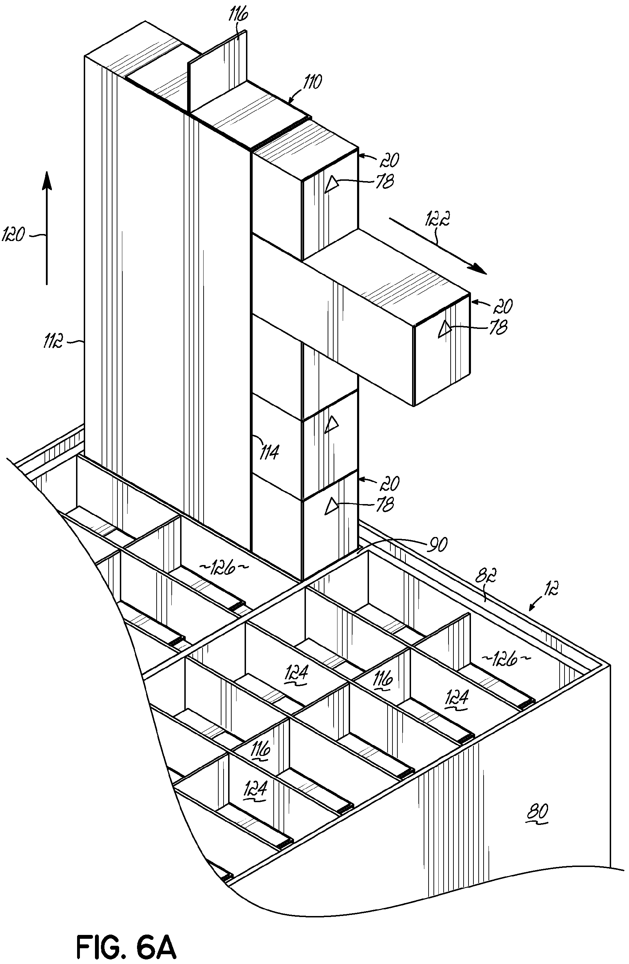

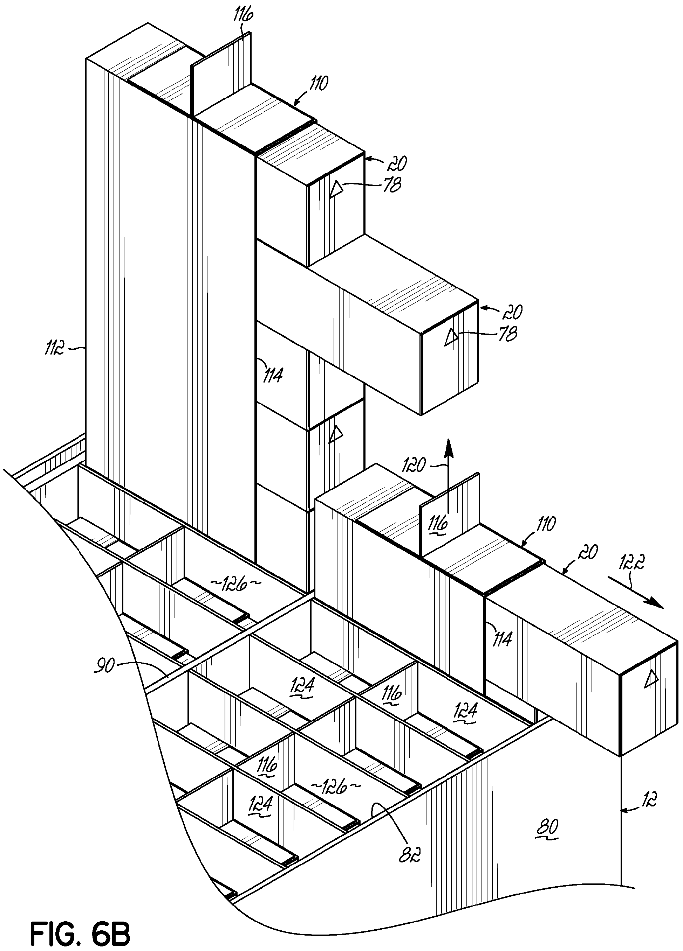

The five packs 20 may be stored in a plurality of cartridges 110 (best shown in Figs. 5, 6A, and 6B). The five packs 20 in each cartridge 110 may include precoated brackets of one particular style or model. When the dispenser cabinet 12 is loaded with packs 20, the packs 20 may be arranged by quadrant 100, 102, 104, 106. In other words, each quadrant 100, 102, 104, 106 may include packs 20 that contain precoated orthodontic brackets associated with a particular quadrant of the patient's mouth. In that regard, the patient's mouth may be conceptually divided into the upper left quadrant, the upper right quadrant, the lower left quadrant, and the lower right quadrant. Those quadrants may be related to the dispenser cabinet 12 and define a storage scheme in the system 10. With regard to the dispenser cabinet 12, the upper left quadrant of the patient's mouth may be associated with the quadrant 100 of the dispenser cabinet 12, the upper right quadrant may be associated with the quadrant 102 of the dispenser cabinet 12, the lower left quadrant may be associated with the quadrant 104 of the dispenser cabinet 12, and the lower right quadrant may be associated with the quadrant 106 of the dispenser cabinet 12.

With reference to Fig. 5, in this way, as the five packs 20 are received from the manufacturer, the orthodontist may store them in a respective one of the cartridges 110 that includes orthodontic brackets of the same type/style/model. The cartridge 110 may then be inserted into one of the quadrants 100, 102, 104, 106 associated with a quadrant of the patient's mouth in which that particular orthodontic bracket is to be utilized.

As shown in Fig. 5, the cartridge 110 may be loaded with ten five packs 20 and then inserted into the quadrant 106 that may be associated with the patient's lower right quadrant. However, the cartridge 110 may be loaded with five packs 20 of orthodontic brackets for any single one of the other quadrants 100, 102, or 104. This organization system, which may begin initially on receipt of five packs 20 into inventory received from a manufacturer, prevents inadvertent misplacement of orthodontic brackets on the patient's teeth, prevents mishaps in orthodontic bracket inventory, and automates inventory management through the use of RFID tags on the packs 20 or packages 22.

With reference now to Figs. 5, 6A, and 6B, in one embodiment, the cartridge 110 is an elongated rectangular enclosure 112 with a width sized to receive the narrow width of the five pack 20 and a length sized to receive approximately 10 five packs 20 in a vertical stack. The rectangular enclosure 112 includes an open side 114 through which the five packs 20 may be inserted and removed as is generally shown in Figs. 6A and 6B. A pull tab 116 may extend from the rectangular enclosure 112 and so protrude in a direction away from the enclosure 112 so that the orthodontist may grasp the pull tab 116 to pull the cartridge 110 in a vertical direction as indicated by arrow 120 in Fig. 6A. One or more five packs 20 may be removed from or inserted into the cartridge 110 as indicated by arrow 122 in Figs. 6A and 6B. As is shown best in Figs. 6A and 6B, subdividers 124 may extend from the divider 90 to the sidewall 80 to form individual pockets or sleeves 126 into which a respective one of the cartridges 110 may be inserted.

With reference now to Figs. 1, 7, 8, in one embodiment, the working tray 14 is a cabinet having an outer shell 140 that defines a rectangular cuboid. One side 142 is open, and a horizontal divider 144 divides the shell 140 into upper and lower portions, and a second divider 146 may divide the upper or lower portions into respective left and right portions. Drawers 148 are slidably inserted into each of the four divided portions. The drawers 148 may each have a pull tab or handle 170 which facilitates opening and closing the drawer relative to the shell 140. The divided portions of the shell 140 may correspond to the quadrants 100, 102, 104, and 106 of the dispenser cabinet 12 and/or with a conceptual division of the human mandibular or maxillary arches into the quadrants described above. With this arrangement scheme, the drawers 148 contain packages 22 that were originally stored in a corresponding one of the quadrants 100, 102, 104, and 106 of the dispenser cabinet 12.

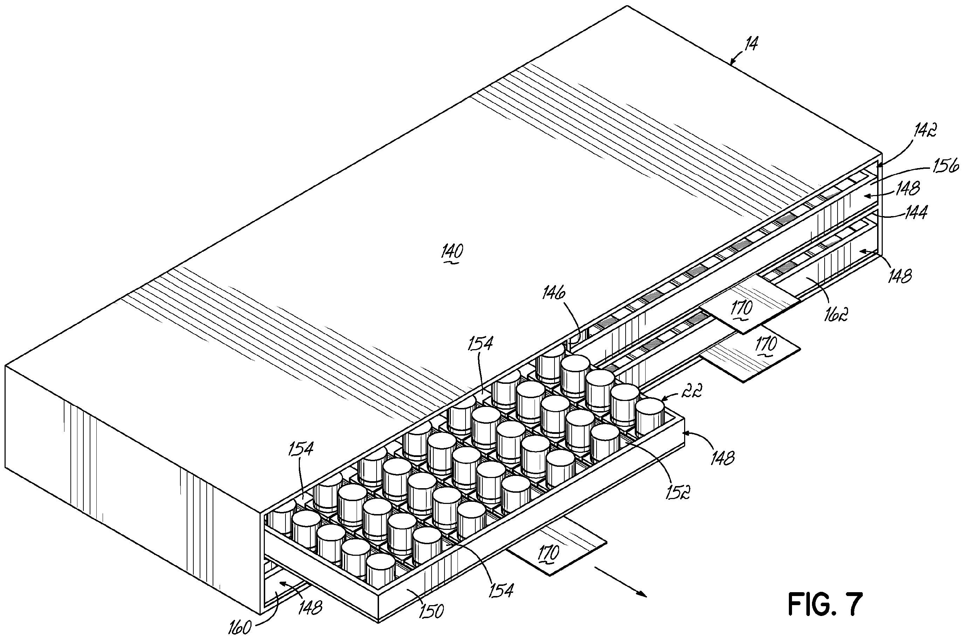

For example, as is shown in Fig. 7, facing the working tray 14, the upper left drawer 150 may correspond to the quadrant 100 of the dispenser cabinet 12 and include dividers 152 that separate the drawer 150 into rows 154. Each row 154 may include an inventory of packages 22 of a particular orthodontic bracket 24. That is, any two rows 154 in the drawer 150 may contain different precoated orthodontic brackets. Further, in one embodiment, each row 154 may correspond to one of the cartridges 110 in the quadrant 100 of the dispenser cabinet 12. The orthodontist may therefore remove the five pack 20 of a particular precoated orthodontic bracket from one of the cartridges 110 in the quadrant 100 and place those packages 22 into a corresponding row 154 of the drawer 150. Further with regard to that organizational scheme, the upper right drawer 156 may correspond to the quadrant 102, the lower left drawer 160 may correspond to the quadrant 104, and the lower right drawer 162 may correspond to the quadrant 106. With this one-to-one correspondence of the quadrants, brackets for a particular quadrant in the patient's mouth may be more easily tracked while reducing errors in placement and improving inventory accuracy.

While each of the dispenser cabinet 12 and the working tray 14 are shown as rectangular cuboids, embodiments of the invention are not limited to those configurations. It is contemplated that one or both of the cabinet 12 and the working tray 14 may be shaped to mimic the mandibular and maxillary arches. Each would be shaped in the form of an arch. In such a case, there may be two cabinets 12 and/or two working trays 14. In the pair of cabinets 12 and/or in the pair of working trays 14, one of the pair would mimic the mandibular arch and the other would mimic the maxillary arch. With that shape, each cartridge 110 or sleeve 126 would correspond to a particular tooth or each row 154 of the working tray 14 would correspond to a particular tooth in the particular arch. Thus, the clinician would need only open the drawer or cartridge as represented by a particular tooth and remove the package 22 containing the bracket 24 specific to that tooth. The system 10 by its design would visually reinforce the organization of each bracket to its corresponding tooth.

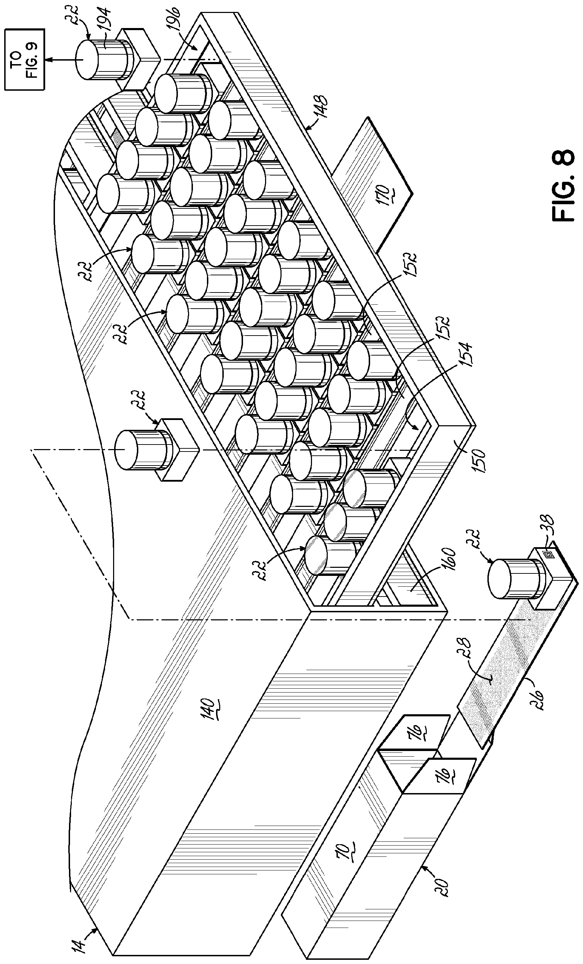

With reference to Fig. 8, the packages 22 within that five pack 20 may be used to restock the working tray 14. Each of the packages 22 may be separated from the adhesive strip 28 on the strip 26 and may be placed in a row 154 of the drawer 150. Placement of the packages 22 may be according to the organizational scheme described above. For example, the row 154 of the drawer 150 may correspond to five packs 20 stored in the cartridge 110 found in sleeve 126 (labeled in Fig. 5) of the quadrant 100. Alternatively, the packages 22 together with the strip 26 may be inserted into the row 154. Accordingly, the RFID tag 38 embedded or attached to the strip 26 (see Fig. 3) is moved with the attached packages 22 into row 154. Throughout this restocking procedure, the RFID tag 38 may be in communication with the RFID reader 94 and so may track the five pack 20 and/or the packages 22 from the dispenser cabinet 12 to the working tray 14.

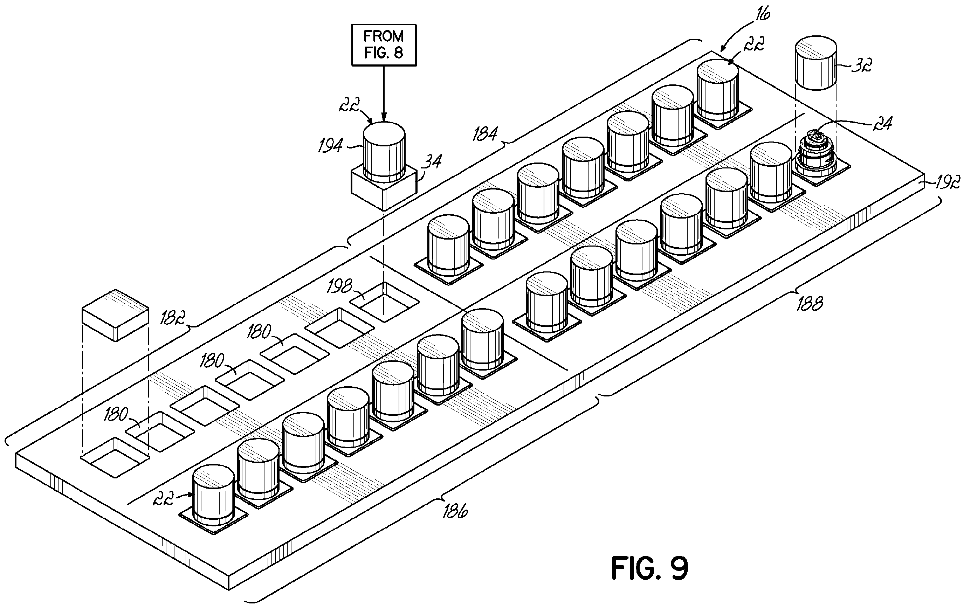

With reference now to Figs. 1, 8, and 9, in one embodiment, the inventory of packages 22 available in the working tray 14 may be transferred to an individual patient set-up card 16. As is shown best in Fig. 9, the set-up card 16 may be a planar member 192 that includes multiple cutouts 180. The cutouts 180 are arranged in rows and are visually divided into four quadrants generally indicated as 182, 184, 186, and 188. These quadrants may correspond to the drawers 150, 156, 160, and 162, respectively, of the working tray 14 and so may also correspond to the quadrants 100, 102, 104, and 106 of the dispenser cabinet 12. The cutouts 180 may further correspond to a respective row 154 in the corresponding drawer 148 of the working tray 14 and so may also correspond to a respective one of the cartridges 110 located in the corresponding sleeve 126 of quadrant 100, 102, 104, or 106.

For example, with reference to Figs. 8 and 9, the package 194 shown in Fig. 8 may be taken from the rightmost row 196 of the drawer 150. As is described above, drawer 150 is associated with the upper left quadrant of the patient's mouth. With reference to Fig. 9, that package 194 may be inserted into a cutout 198 that corresponds to the row 196 of the drawer 150. The cutout 198 also corresponds to the upper left quadrant of the patient's mouth. Taking into consideration the teeth in the upper left quadrant of the patient's mouth, the cutout 198 and the row 196 may correspond to a particular tooth in the upper left quadrant of the patient's mouth. For example, the row 196 and the cutout 198 may correspond to an upper central incisor. Thus, the package 194 may include a precoated orthodontic bracket for use on the upper central incisor. Each cutout 180 is sized to receive the base 34 of a package 22. Once the set-up card 16 is stocked with the packages 22 necessary to complete orthodontic treatment (i.e., installation of the brackets 24 on the patient), the set-up card 16 is taken to the patient.

The clinician may then remove the cap 32 from a respective one of the bases 34 to expose the orthodontic bracket 24 for use on a particular tooth in any particular quadrant of the patient's mouth. As was described above, the orientation of the orthodontic bracket is specific to the base 34. This orientation is established during assembly of the package 22 at the manufacturing facility. Thus, all of the orthodontic brackets 24 in all of the packages for a specific style of orthodontic bracket 24 may be oriented the same with respect to the base 34 of the package 22.

The orthodontic bracket 24 may therefore be best oriented so that the clinician may simply pluck the orthodontic bracket 24 from the post 36 in an orientation which may be transferred directly to the patient's tooth. In this way, there is no need for the clinician to remove the orthodontic bracket from the package only to subsequently reorient the orthodontic bracket prior to placement on the patient's tooth. Advantageously, the posts 36 prominently display the orthodontic bracket 24. The orthodontic bracket 24 is exposed on all upper sides with no impediments obstructing the orthodontist's access thereto. Only the bottom of the bracket 24 may not be accessible. The predetermined orientation of the orthodontic bracket 24 relative to the base 34 ensures that the position and orientation of the orthodontic bracket facilitates predicable, consistent orientation on the patient set-up card 16, which in turn promotes best practices by the orthodontist during installation procedures. This enables the clinician to repeatedly and consistently transfer each bracket 24 to the patient's tooth and eliminates any repositioning of the orthodontic bracket prior to placement. The consistent orientation of the bracket 24 relative to the base 34 of the package 22 reduces chair time and reduces mistakes associated with repositioning the bracket prior to placement on the patient's tooth.

Thus, in an overall advantage to the system 10, the clinician may stock the dispenser cabinet 12 with orthodontic brackets. Each of those brackets in the dispenser cabinet 12 may be included in a cartridge 110 that corresponds to a quadrant of the patient's mouth and possibly a specific tooth in that quadrant. From the dispenser cabinet 12, the orthodontic bracket may be transferred to the working tray 14 at a location that corresponds to the location of the orthodontic bracket in the dispenser cabinet 12 and to a quadrant in the patient's mouth. The location in the working tray 14 may also correspond to a specific tooth in the patient's mouth. From the working tray 14, the bracket may be placed into the set-up card 16. The location on the set-up card 16 may ultimately correspond to the location in the working tray 14. According to the organizational scheme, the packages 22 may follow a predetermined path through the system 10 that is determined by the anatomy of the mouth.

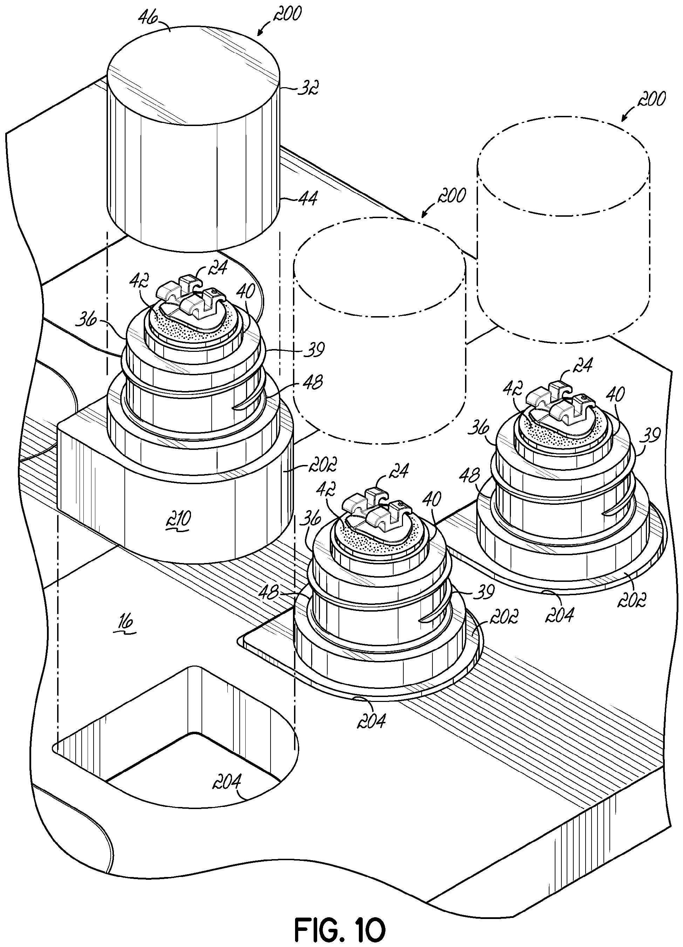

With reference now to Fig. 10, in which like reference numerals refer to like elements throughout the figures, in one embodiment, a package 200 may be similar to the package 22 in many respects but differs in the configuration of the base labeled 202 in Fig. 10. As shown, the base 202 has an irregular shape, that is, it is unlike the square base 34 shown in Fig. 4. A cutout 204 in the set-up card 16 permits the package 200 to be inserted into the cutout 204 in only a single orientation. When the orthodontic bracket 24 is consistently oriented on the post 36 relative to the base 202 of each package 200, the single orientation of the package 200 in the set-up card 16 ensures that brackets 24 for multiple packages 200 are all uniformly oriented relative to the set-up card 16. During placement of each of the orthodontic brackets 24 on the patient's teeth, the clinician may remove the cap 32 to expose the orthodontic bracket 24. The bracket 24 for each package 200 is presented in the same orientation. The clinician may predict that orientation so that the bracket 24 may be consistently accessed. The clinician may then grasp the orthodontic bracket 24 with forceps in an orientation that allows the bracket 24 to be immediately and directly attached to the patient's tooth. Thus, placement on the patient's tooth may include an initial step of grasping the orthodontic bracket 24 followed by placement on the tooth. This eliminates an intermediate step or process of reorientation of the orthodontic bracket. For example, the clinician often uses an object such as a finger to place the orthodontic bracket so that it can be regrasped. Advantageously, the system 10 and packages 22, 200 described herein may eliminate an intermediate reorientation of the orthodontic bracket prior to placement on the patient's tooth.

With reference now to Figs. 11, 12, and 13 in which like reference numerals refer to like elements throughout the drawings, embodiments of the present invention may include other package configurations. With reference to Fig. 11, the base 202 includes a sidewall 210 that defines a horse-shoe shaped base. In place of the pressure sensitive adhesive 42 (shown in Fig. 4) there is a rod 212 that extends from the post 36. The orthodontic bracket 24 may include a blind bore (not shown) into which the rod 212 is inserted. The rod 212 holds the orthodontic bracket 24 in an orientation relative to the base 202. The clinician may then lift the orthodontic bracket 24, separating it from the rod 212.

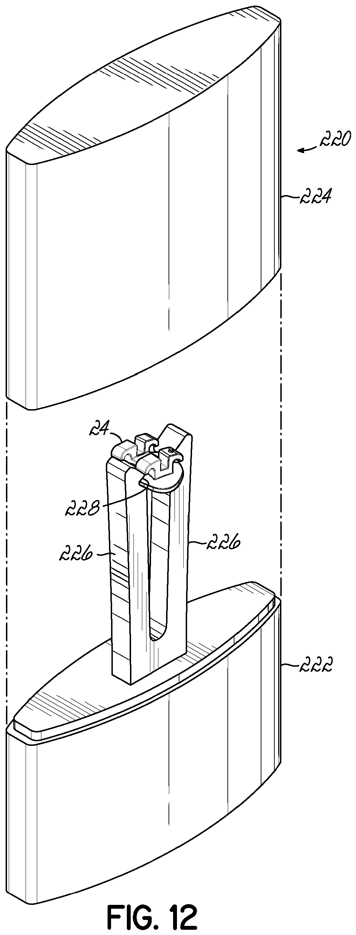

With reference now to Fig. 12, which depicts an embodiment that does not fall within the scope of the claimed invention, the package 220 includes a base 222 and a cap 224 that forms a hermetic seal with the base 222. A pair of tines 226 extend from the base 222. The tines 226 are elastically deformable with each including a notch or cutout 228 configured to receive a portion of the bracket 24. The orthodontic bracket 24 may be positioned between the tines 226 so that each of the tines 226 may be elastically deformed or biased inwardly. The bias on the tines 226 causes the tines 226 to forcibly engage the bracket 24 in each of the cutouts 228 and hold the orthodontic bracket 24 in a predetermined position. The clinician may remove the orthodontic bracket 24 by slightly bending the tines 226 away from the orthodontic bracket 24 with a tool to release the orthodontic bracket 24. The cap 224 and the base 222 may form a hermetic and light tight compartment within which the precoated orthodontic bracket 24 resides. Advantageously, due to the configuration of the base 222 and cap 224, the package 220 is easier to grasp and may allow the cap 224 to be separated from the base 222 with less rotational twist than a threaded design.

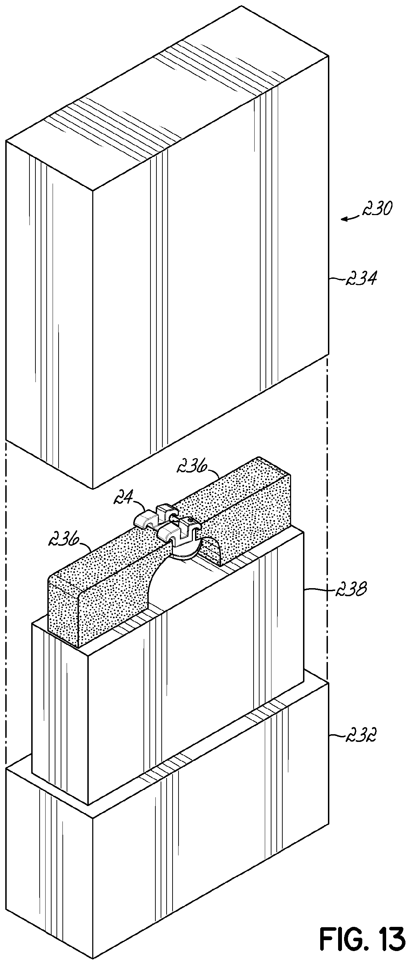

With reference now to Fig. 13, which depicts an embodiment that does not fall within the scope of the claimed invention, a package 230 includes a base 232 and a cap 234 and forms a hermetic seal with the base 232. Each of the base 232 and the cap 234 have an elongated rectangular configuration. A pair of arches 236 of an elastic foam material, such as a molded thermoplastic elastomer, extend from a post 238 to compress against each side of the orthodontic bracket 24. The post 238 and base 232 may be formed by a two-shot molding process in which the base 232 is a different thermoplastic. The clinician may remove the orthodontic bracket 24 by slightly bending the foam fingers 236 away from the orthodontic bracket 24 to release the orthodontic bracket 24.

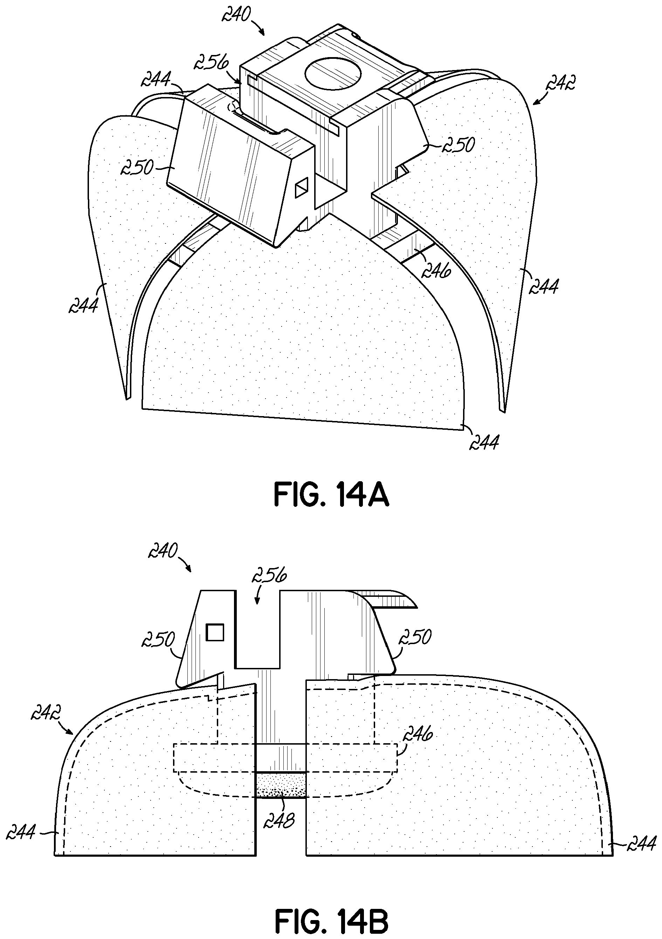

With reference now to Figs. 14-20B, other attachment members for securing the orthodontic bracket to a post or a base of a package are shown. For example, in Figs. 14A-14B, an orthodontic bracket 240 may be held in a specific orientation by a flexible leaf system 242. The orthodontic bracket 240 differs from the orthodontic bracket 24 shown in Fig. 4 in that the orthodontic bracket 240 is a self-ligating orthodontic bracket. It will be appreciated, however, that the system 10 is not limited to use with any particular orthodontic bracket. Further in that regard, the system 10 may be utilized with brackets that are not precoated.

The leaf system 242 may include a plurality of leaves 244 that extend from a post or a base (not shown), such as the post 36 or a base 34, described above with reference to Fig. 4. The leaves 244 may flex independently of one another and engage the orthodontic bracket 240 at a location other than at a bottom of the bracket 240, which is referred to as a pad (labeled 246) in Figs. 14A and 14B. The bracket 240 may be precoated with an adhesive 248 as described above. The adhesive 248 is attached to the pad 246 so that it is positioned to bond the orthodontic bracket 240 to a patient's tooth. As shown in Figs. 14A and 14B, advantageously, the leaves 244 contact the orthodontic bracket 240 at a location other than on the adhesive 248. As shown, the leaves 244 may releasably engage the orthodontic bracket 240 below one or more tie wings 250.

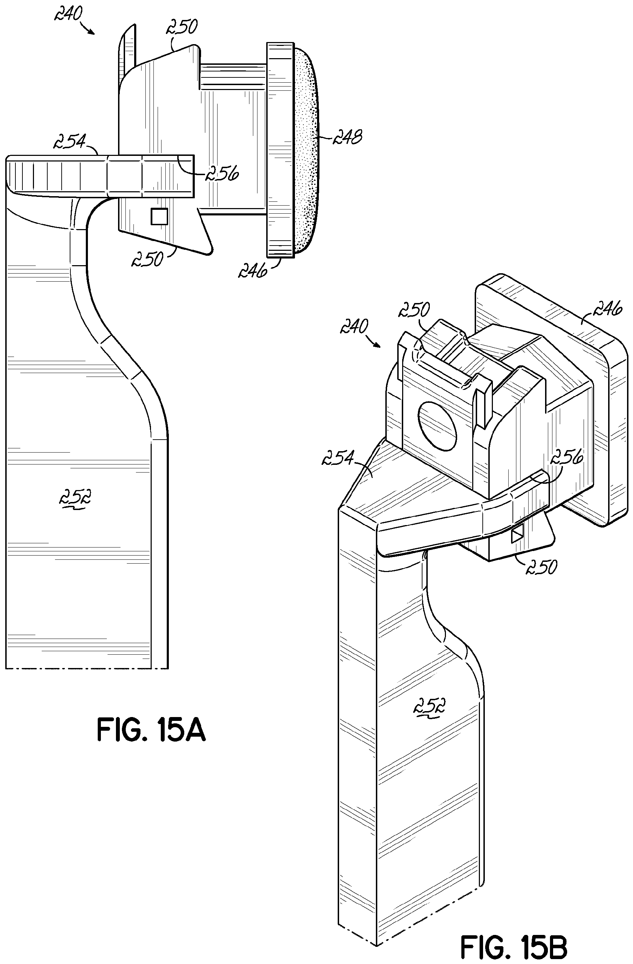

With reference to Fig. 15A-15B, in one embodiment, an arm 252 extends from a post or a base (not shown) and a hand 254 extends generally perpendicular to the arm 254. The hand 254 holds the orthodontic bracket 240 by extending into an archwire slot 256. Advantageously, the arm 252 and hand extension 254 do not contact an adhesive precoated on the pad 246.

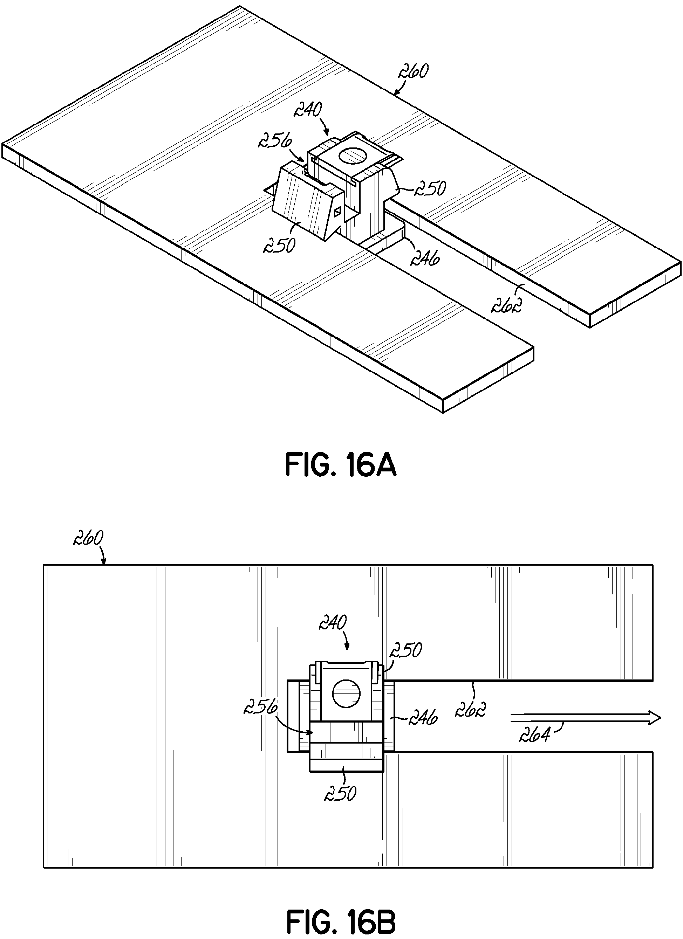

In one embodiment and with reference to Figs. 16A and 16B, a thin sheet 260 may extend from a post or a base, described above. The thin sheet 260 includes a cutout 262 that is sized to receive the orthodontic bracket 240 under opposing tie wings 250. The orthodontic bracket 240 may be removed from the sheet 260 by sliding the orthodontic bracket 240 in the direction of the arrow 264. Advantageously, the sheet 260 does not contact the adhesive.

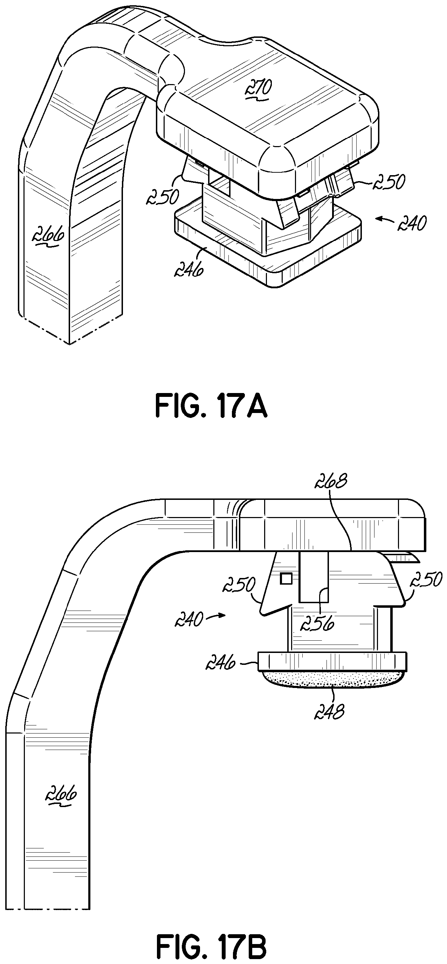

In one embodiment and with reference to Figs. 17A and 17B, the orthodontic bracket 240 may be secured an arm 266 that extends from a post or a base (not shown), described above. The arm 266 may include a pad 270 that contacts the upper surface 268 of the orthodontic bracket 240. The pad 270 may include an adhesive or be magnetic to secure the orthodontic bracket 240 to the pad 270. Advantageously, the arm 266 and the pad 270 do not contact the adhesive 248 on the orthodontic bracket 240.

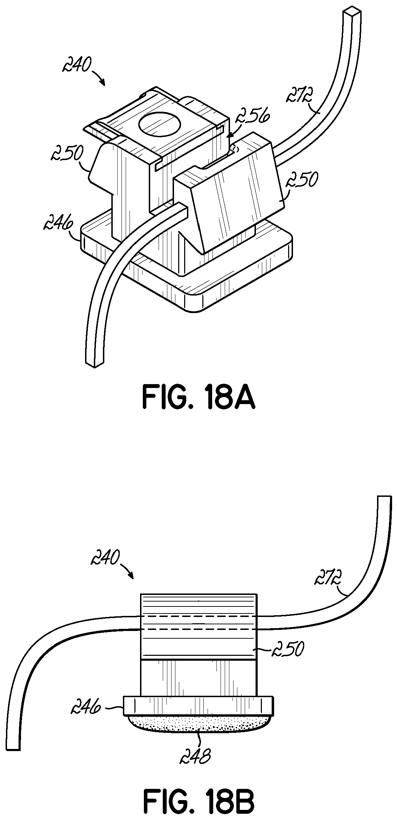

In one embodiment and with reference to Figs. 18A and 18B, the orthodontic bracket 240 may be secured to a wire 272 that extends from a post or a base (not shown). The wire 272 may extend through an auxiliary bore, not the archwire slot 256, to secure the orthodontic bracket 240 within the package 22. Advantageously, the wire 272 does not contact the adhesive 248 on the orthodontic bracket 240.

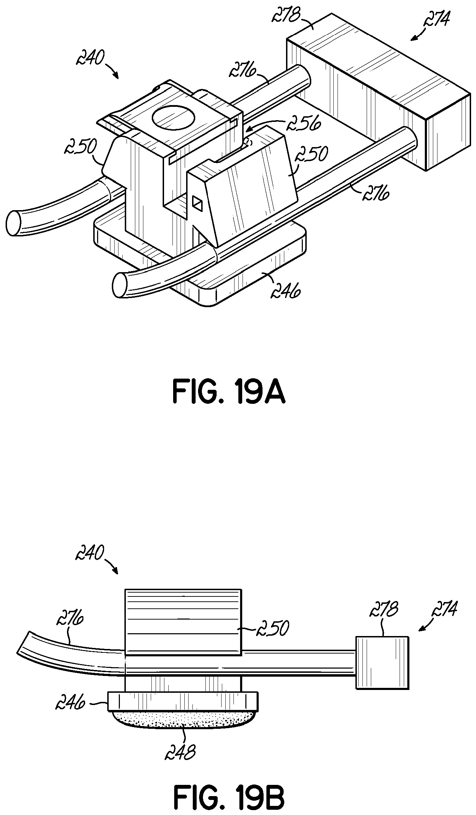

In one embodiment and with reference to Figs. 19A and 19B, the orthodontic bracket 240 may be secured to a post or a base, described above, by a wire rack 274 that includes a pair of forks 276 extending from a base 278. Although not shown, the base 278 may extend from a post or a base, described above. Each of the forks 276 engages the orthodontic bracket 240 at a location between the tie wings 250. The orthodontic bracket 240 may be removed from the rack 274 by sliding the orthodontic bracket 240 in the direction indicated by arrow 280.

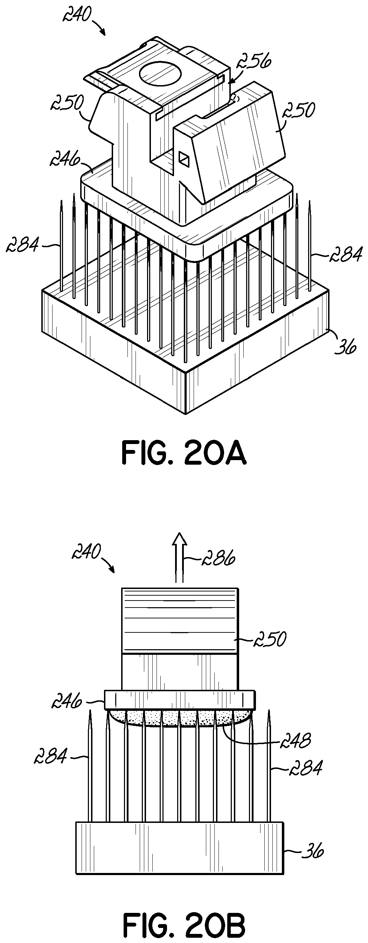

In one embodiment and with reference to Figs. 20A and 20B, the orthodontic bracket 240 may be secured to a post or a base, described above, by a plurality of wire pins 284. Although the wire pins 284 may contact the adhesive 248 only the tips of the pins 284 may make contact. So, removal of the orthodontic bracket 240 may only require slight pulling force shown in the direction indicated by the arrow 286.

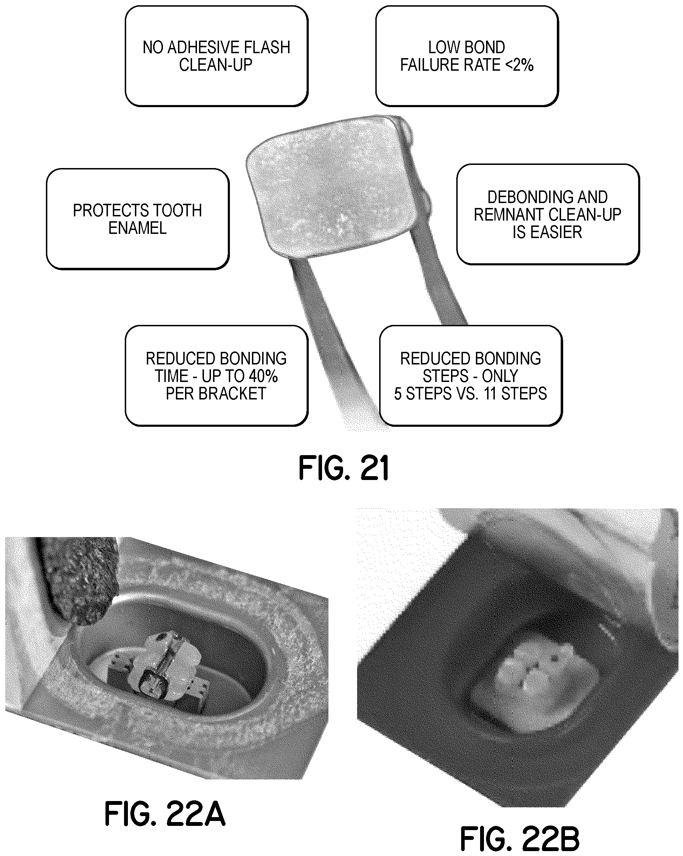

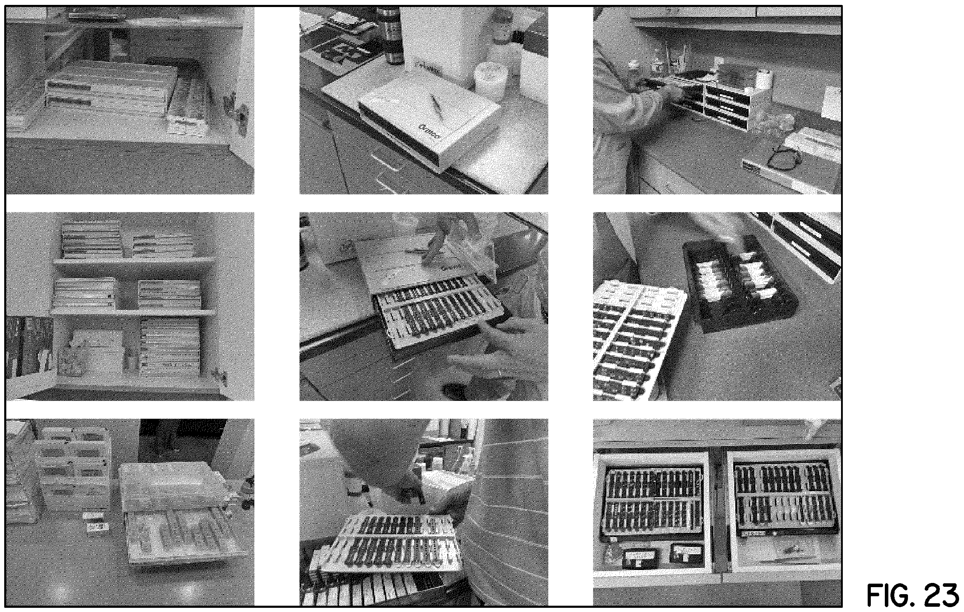

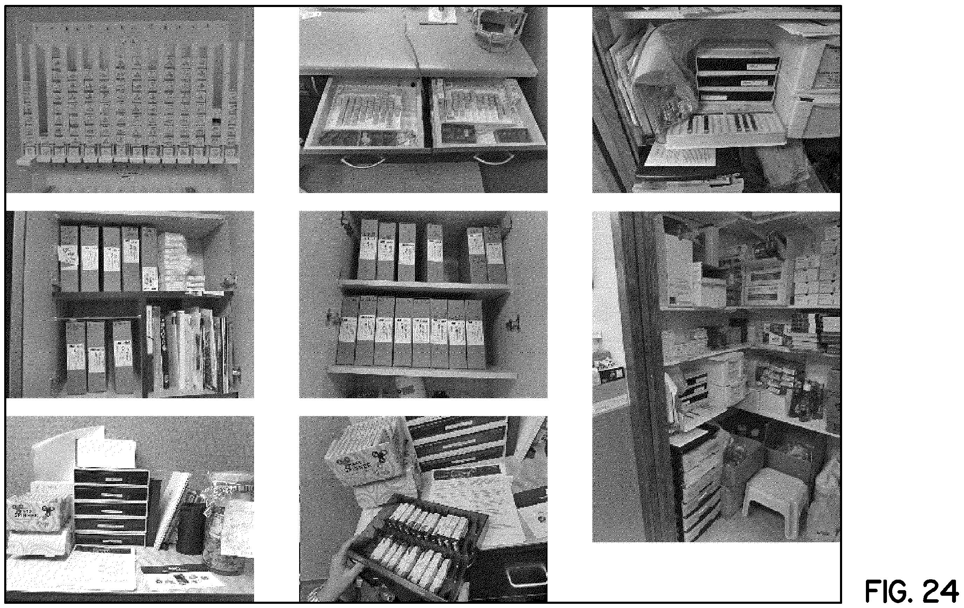

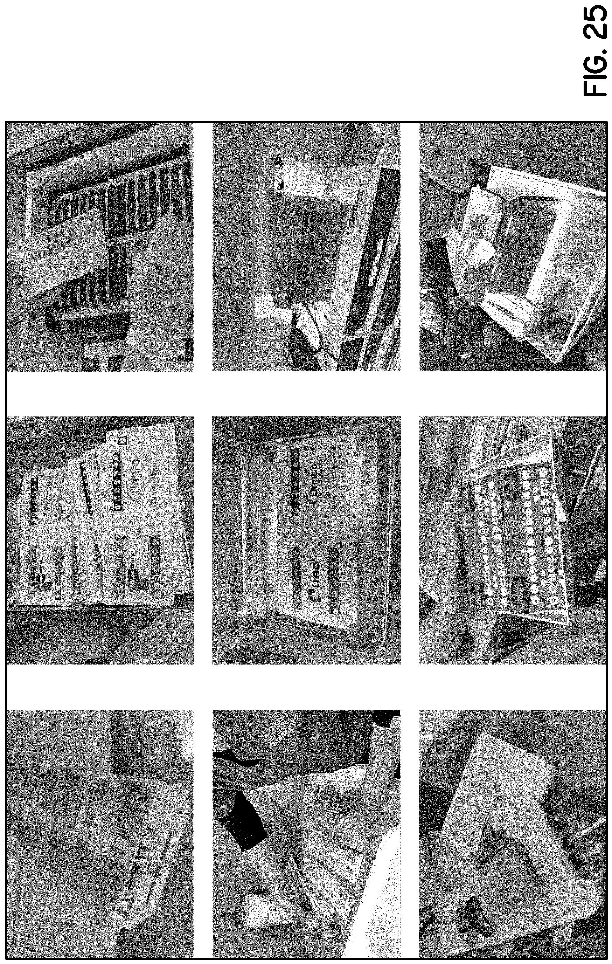

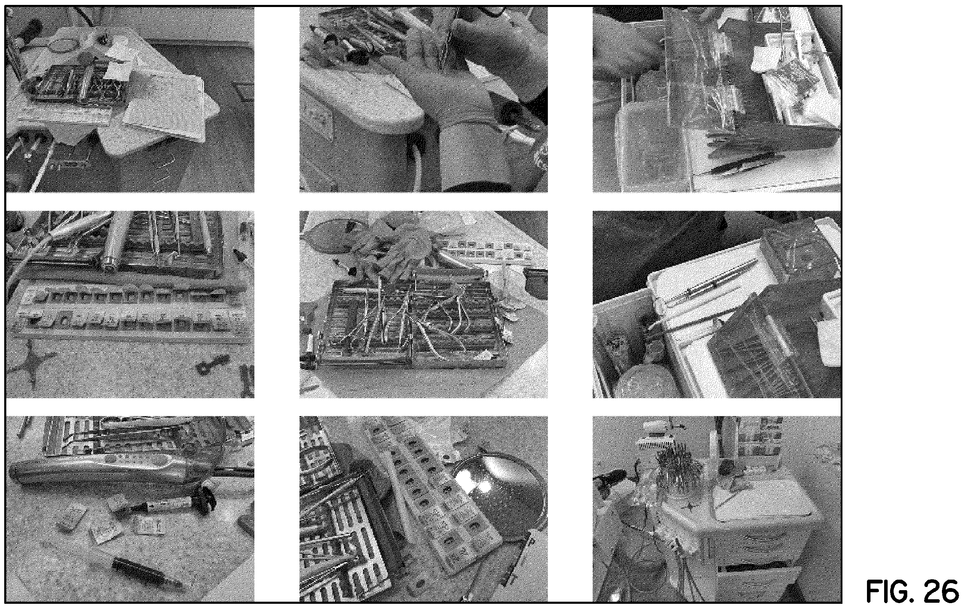

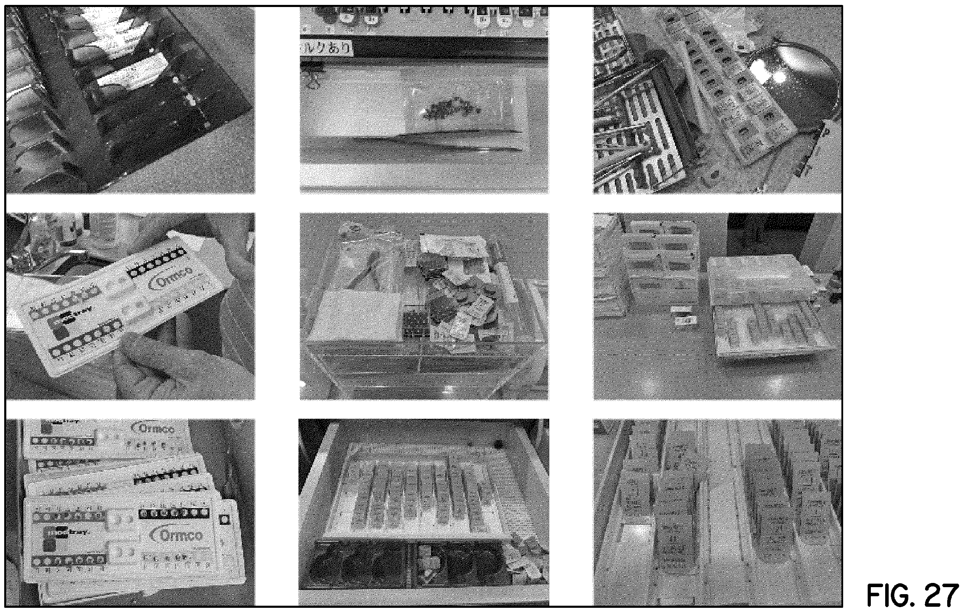

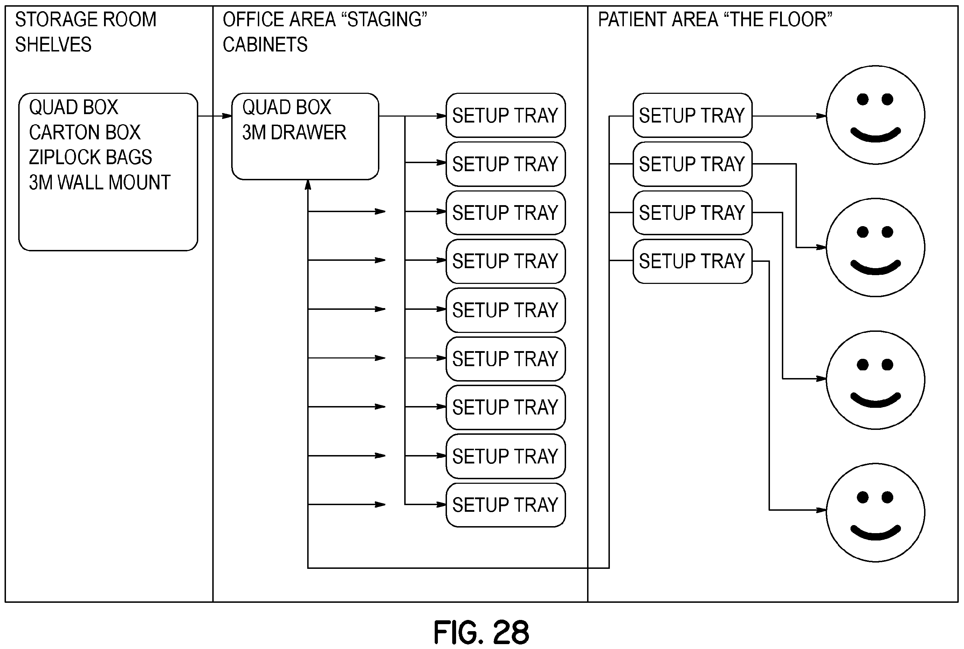

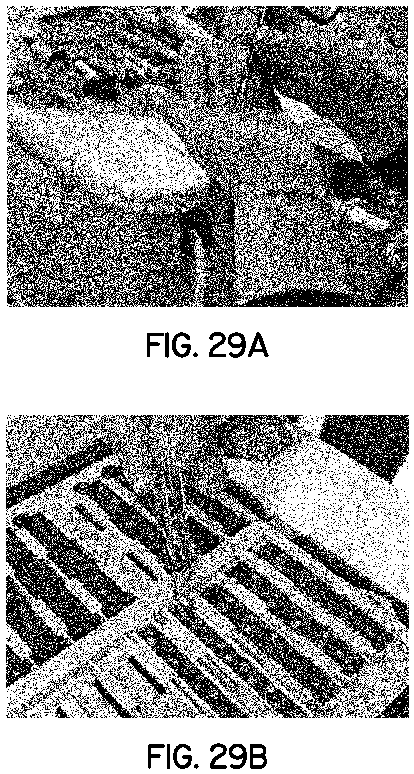

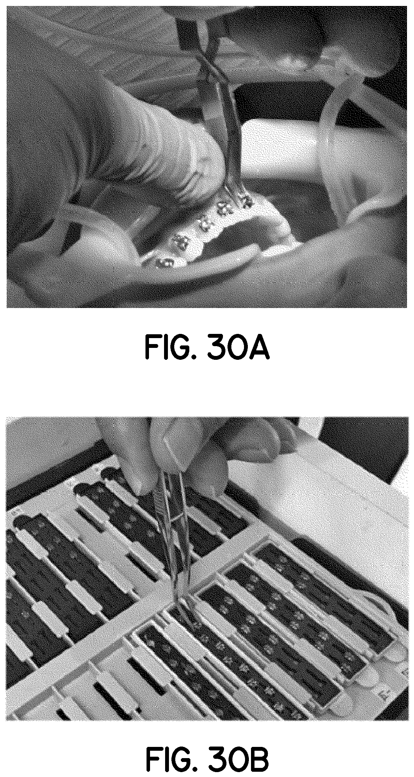

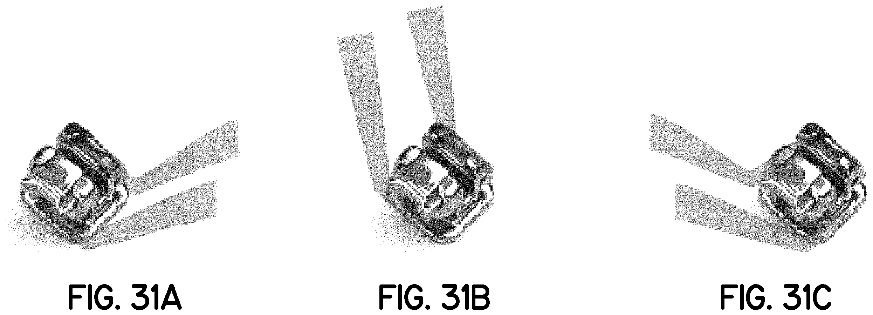

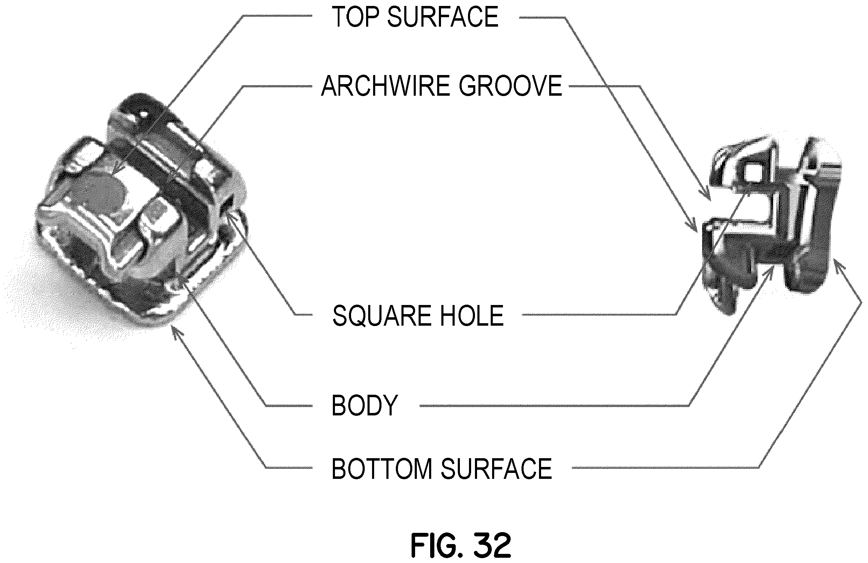

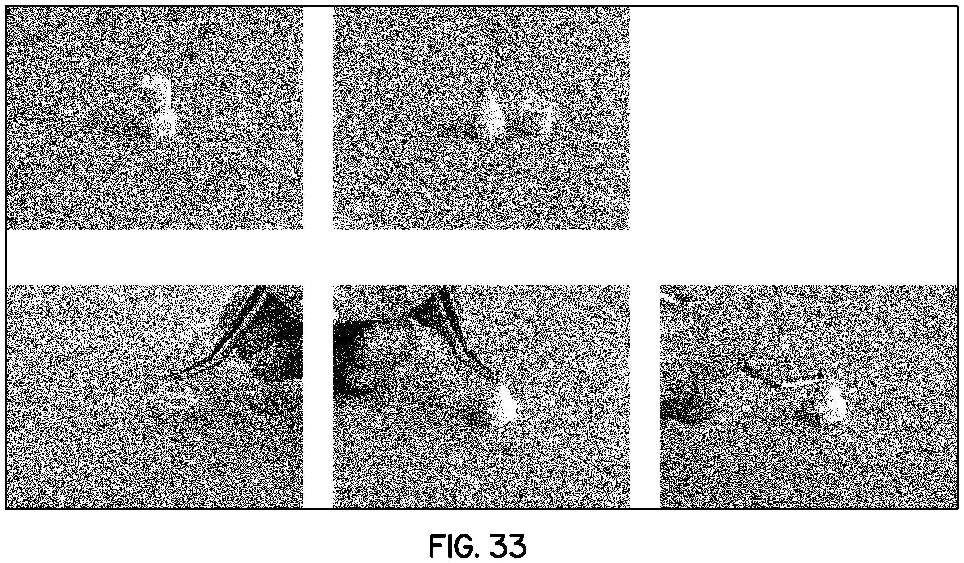

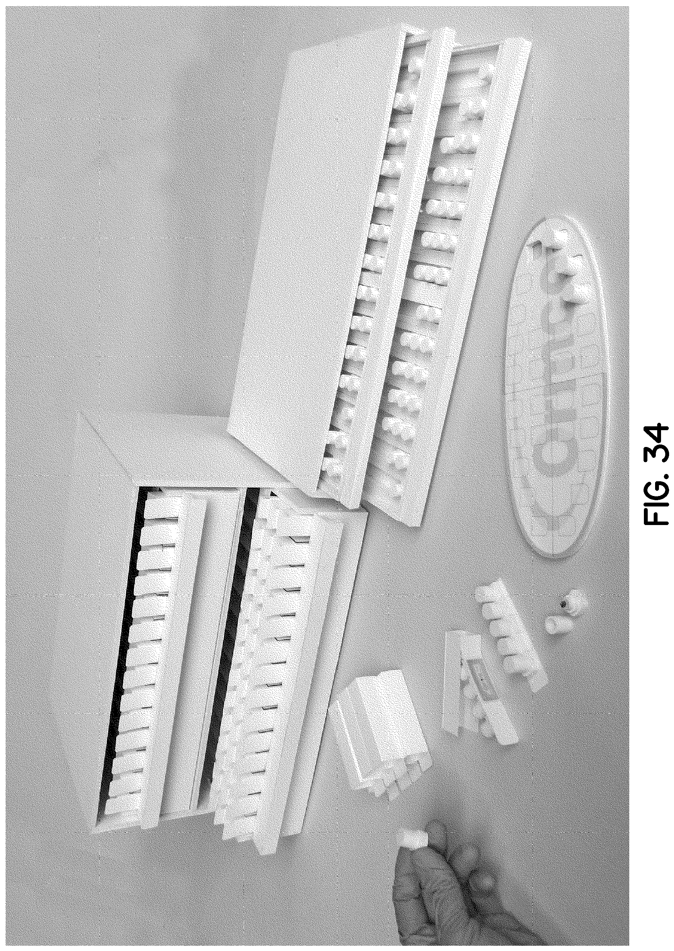

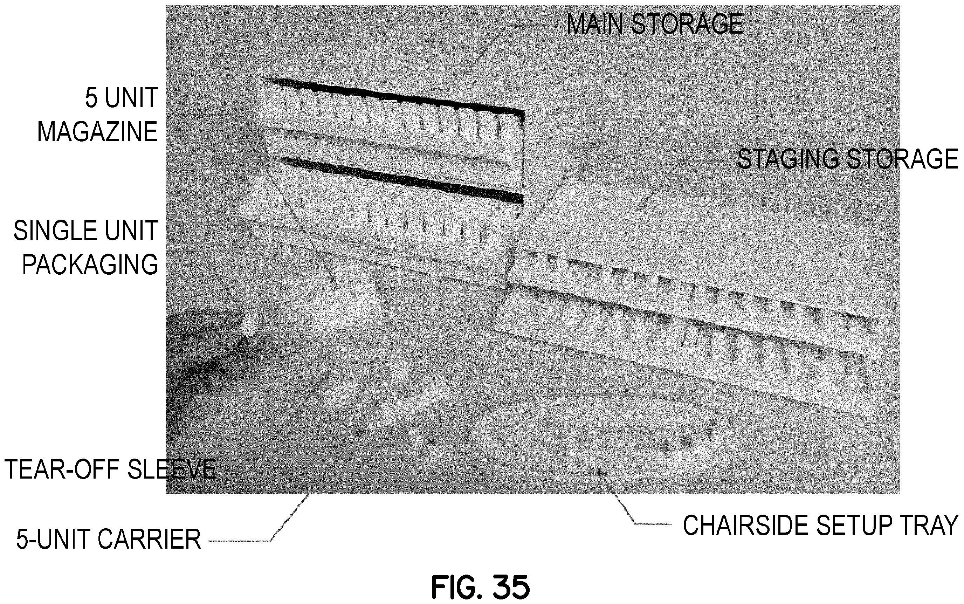

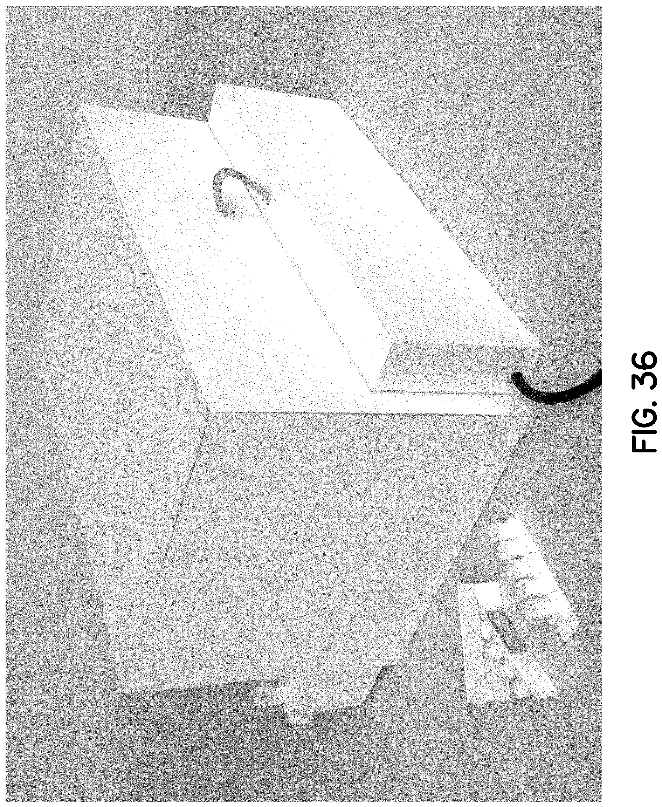

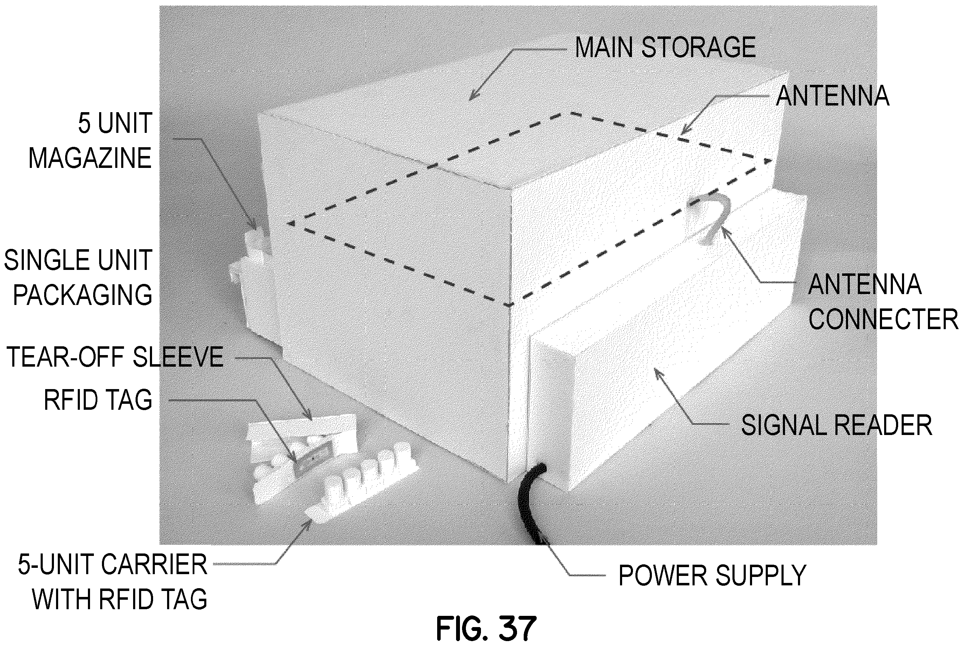

Figs. 21, 22A, 22B, 23, 24, 25, 26, 27, 28, 29A, 29B, 30A, 30B, 31A-31C, 32, 33, 34, 35, 36, and 37 illustrate other aspects some of which do not fall within the scope claimed invention but are nevertheless useful for understanding it.

While the present invention has been illustrated by a description of various embodiments and while these embodiments have been described in some detail, it is not the intention of the inventors to restrict or in any way limit the scope of the appended claims to such detail. Thus, additional advantages and modifications will readily appear to those of ordinary skill in the art. The various features of the invention may be used alone or in any combination depending on the needs and preferences of the user.

## Claims

1. A storage and dispensing system (10) of orthodontic brackets for use in an orthodontist's office comprising:
a package (22, 200) that encloses an orthodontic bracket (24, 240), the package (22, 200) including a base (34, 202) and a cap (32) the base (34, 202) having a post (36) extending therefrom on which the orthodontic bracket (24, 240) is secured, and the cap (32) including a blind bore (57) that extends over and surrounds the post (36) and the orthodontic bracket (24, 240), wherein the cap (32) and the base (34, 202) are configured to form a moisture tight seal therebetween,
characterized therein that the cap (32) includes a thread and the base (34, 202) includes a corresponding thread, the thread of the cap (32) engaging the thread of the base (34, 202) when the cap (32) is coupled to the base (34, 202).

2. The storage and dispensing system of claim 1 wherein the base (34, 202) or the cap (32) includes an o-ring (48) and the other of the cap (32) or the base (34, 202) seals in contact with the o-ring (48) when the cap (32) is coupled to the base (34, 202).

3. The storage and dispensing system of any preceding claim wherein the package (22, 200) is resealable to form the moisture tight seal.

4. The storage and dispensing system of any preceding claim wherein the base (34) has a rectangular cross-section having a gingival side (58), a mesial side (52), an occlusal side (54), and a distal side (56) and the orthodontic bracket (24, 240) has a gingival side (66), a mesial side (60), an occlusal side (52), and a distal side (64) and each of the base sides is aligned with a corresponding one of the orthodontic bracket sides.

5. The storage and dispensing system of any preceding claim wherein the base (34, 202) includes attachment member on the post (36) and the orthodontic bracket (24, 240) is releasably secured to the attachment member.

6. The storage and dispensing system of any preceding claim wherein the base (34, 202) includes a rod (212) extending from the post (36), the orthodontic bracket (24, 240) being secured to the rod (212).

7. The storage and dispensing system of claim 1 wherein the base (34, 202) includes a pair of tines (226) that are elastically deformable and the orthodontic bracket (24, 240) is held in position between the tines (226).

8. The storage and dispensing system of claim 1 wherein the base (34, 202) includes a pair of arches (236) of a foam material extending from the base (34, 202) and the orthodontic bracket (24, 240) is compressed between the arches (236).

9. The storage and dispensing system of any preceding claim wherein the package (22, 200) or a plurality of the packages (22, 200) is releasably secured to a strip (26) and the strip includes an RFID tag (38).

10. The storage and dispensing system of claim 1 wherein a cross-section of the base (34, 202) is an irregular polygon.

11. The storage and dispensing system of claim 1 further including a patient set-up card (16) having a plurality of cutouts (180) arranged in groups and a working tray (14) having a plurality of drawers (148, 150, 156, 160, 162) arranged to correspond to the groups and configured to store a plurality of packages (22, 200).

12. The storage and dispensing system of claim 11 further including a dispenser cabinet (12) having quadrants (100, 102, 104, 106) defined by dividers (90, 92,152) that correspond to the groups and are configured to store a plurality of packages (22, 200).

13. The storage and dispensing system of claim 12 further including a pack (20) in which a plurality of the packages (22, 200) are releasably secured to a strip (26) and the strip (26) includes an RFID tag (38) and wherein one of the dispenser cabinet (12) and the working tray (14) includes an RFID reader (94) configured to read information from the RFID tag (38).

14. The storage and dispensing system of claim 1, 2, 3, 4, 5, 6, 7, 8, or 9 wherein each of the cap (32) and the base (34, 202) are rigid structures that when assembled, form a light-tight and fluid-tight envelope in which the orthodontic bracket (24, 240) is positioned.

## Patentansprüche

1. Aufbewahrungs- und Abgabesystem (10) für kieferorthopädische Brackets zur Verwendung in der Praxis eines Kieferorthopäden, umfassend:
eine Packung (22, 200), die ein kieferorthopädisches Bracket (24, 240) umschließt, wobei die Packung (22, 200) eine Basis (34, 202) und eine Kappe (32) enthält, wobei die Basis (34, 202) eine Säule (36) aufweist, die sich davon erstreckt und an der das kieferorthopädische Bracket (24, 240) fixiert ist, und die Kappe (32) eine Blindbohrung (57) enthält, die sich über die Säule (36) und das kieferorthopädische Bracket (24, 240) erstreckt und diese umgibt, wobei die Kappe (32) und die Basis (34, 202) dazu konfiguriert sind, dazwischen eine feuchtigkeitsdichte Abdichtung zu bilden,
**dadurch gekennzeichnet, dass** die Kappe (32) ein Gewinde enthält und die Basis (34, 202) ein entsprechendes Gewinde enthält, wobei das Gewinde der Kappe (32) in das Gewinde der Basis (34, 202) eingreift, wenn die Kappe (32) mit der Basis (34, 202) gekoppelt ist.

2. Aufbewahrungs- und Abgabesystem nach Anspruch 1, wobei die Basis (34, 202) oder die Kappe (32) einen O-Ring (48) enthält und das andere von der Kappe (32) oder Basis (34, 202) in Kontakt mit dem O-Ring (48) abdichtet, wenn die Kappe (32) mit der Basis (34, 202) gekoppelt ist.

3. Aufbewahrungs- und Abgabesystem nach einem vorhergehenden Anspruch, wobei die Packung (22, 200) wiederabdichtbar ist, um die feuchtigkeitsdichte Abdichtung zu bilden.

4. Aufbewahrungs- und Abgabesystem nach einem vorhergehenden Anspruch, wobei die Basis (34) einen rechteckigen Querschnitt aufweist, der eine gingivale Seite (58), einer mesiale Seite (52), eine okklusale Seite (54) und eine distale Seite (56) aufweist, und das kieferorthopädische Bracket (24, 240) eine gingivale Seite (66), eine mesiale Seite (60), eine okklusale Seite (52) und eine distale Seite (64) aufweist und jede der Basisseiten auf eine entsprechende der Seiten des kieferorthopädischen Brackets ausgerichtet ist.

5. Aufbewahrungs- und Abgabesystem nach einem vorhergehenden Anspruch, wobei die Basis (34, 202) ein Befestigungselement an der Säule (36) enthält und das kieferorthopädische Bracket (24, 240) lösbar an dem Befestigungselement fixiert ist.

6. Aufbewahrungs- und Abgabesystem nach einem vorhergehenden Anspruch, wobei die Basis (34, 202) eine Stange (212) umfasst, die sich von der Säule (36) erstreckt, wobei das kieferorthopädische Bracket (24, 240) an der Stange (212) fixiert ist.

7. Aufbewahrungs- und Abgabesystem nach Anspruch 1, wobei die Basis (34, 202) ein Paar Zinken (226) enthält, die elastisch verformbar sind, und das kieferorthopädische Bracket (24, 240) zwischen den Zinken (226) in Position gehalten wird.

8. Aufbewahrungs- und Abgabesystem nach Anspruch 1, wobei die Basis (34, 202) ein Paar Bögen (236) aus einem Schaumstoff enthält, die sich von der Basis (34, 202) erstrecken, und das kieferorthopädische Bracket (24, 240) zwischen den Bögen (236) zusammengedrückt ist.

9. Aufbewahrungs- und Abgabesystem nach einem vorhergehenden Anspruch, wobei die Packung (22, 200) oder eine Vielzahl der Packungen (22, 200) lösbar an einem Streifen (26) befestigt ist und der Streifen einen RFID-Tag (38) enthält.

10. Aufbewahrungs- und Abgabesystem nach Anspruch 1, wobei ein Querschnitt der Basis (34, 202) ein unregelmäßiges Polygon ist.

11. Aufbewahrungs- und Abgabesystem nach Anspruch 1, ferner eine Patientenkonfigurationskarte (16), die eine Vielzahl von in Gruppen angeordneten Ausschnitten (180) aufweist, und ein Arbeitsmagazin (14) enthaltend, das eine Vielzahl von Schubladen (148, 150, 156, 160, 162) aufweist, die so angeordnet sind, dass sie den Gruppen entsprechen und dazu konfiguriert sind, eine Vielzahl von Packungen (22, 200) aufzubewahren.

12. Aufbewahrungs- und Abgabesystem nach Anspruch 11, ferner einen Abgabekasten (12) enthaltend, der Quadranten (100, 102, 104, 106) aufweist, die durch Trennwände (90, 92,152) definiert sind, die den Gruppen entsprechen und zur Aufbewahrung einer Vielzahl von Packungen (22, 200) konfiguriert sind.

13. Aufbewahrungs- und Abgabesystem nach Anspruch 12, ferner eine Verpackungseinheit (20) enthaltend, in der eine Vielzahl der Packungen (22, 200) lösbar an einem Streifen (26) fixiert sind und der Streifen (26) ein RFID-Tag (38) enthält und wobei eines von dem Abgabekasten (12) und dem Arbeitsmagazin (14) einen RFID-Leser (94) enthält, der zum Lesen von Informationen von dem RFID-Tag (38) konfiguriert ist.

14. Aufbewahrungs- und Abgabesystem nach Anspruch 1, 2, 3, 4, 5, 6, 7, 8 oder 9, wobei jedes von der Kappe (32) und der Basis (34, 202) starre Strukturen sind, die im zusammengebauten Zustand eine licht- und flüssigkeitsdichte Hülle bilden, in der das kieferorthopädische Bracket (24, 240) positioniert ist.

## Revendications

1. Système de stockage et de distribution (10) de brackets orthodontiques destiné à être utilisé dans un cabinet d'orthodontiste comprenant :
un emballage (22, 200) qui renferme un bracket orthodontique (24, 240), l'emballage (22, 200) comprenant une base (34, 202) et un capuchon (32), la base (34, 202) comportant un montant (36) s'étendant à partir de celui-ci sur lequel le bracket orthodontique (24, 240) est fixé, et le capuchon (32) comprenant un alésage borgne (57) qui s'étend sur et entoure le montant (36) et le bracket orthodontique (24, 240),
ledit capuchon (32) et ladite base (34, 202) étant conçus pour former un joint étanche à l'humidité entre eux,
**caractérisé en ce que** le capuchon (32) comprend un filetage et la base (34, 202) comprend un filetage correspondant, le filetage du capuchon (32) engageant le filetage de la base (34, 202) lorsque le capuchon (32) est couplé à la base (34, 202).

2. Système de stockage et de distribution selon la revendication 1, ladite base (34, 202) ou ledit capuchon (32) comprenant un joint torique (48) et l'autre élément parmi le capuchon (32) ou la base (34, 202) se scellant en contact avec le joint torique (48) lorsque le capuchon (32) est couplé à la base (34, 202).

3. Système de stockage et de distribution selon l'une quelconque des revendications précédentes, ledit emballage (22, 200) pouvant être refermé pour former le joint étanche à l'humidité.

4. Système de stockage et de distribution selon l'une quelconque des revendications précédentes, ladite base (34) comportant une section transversale rectangulaire comportant un côté gingival (58), un côté mésial (52), un côté occlusal (54) et un côté distal (56) et ledit bracket orthodontique (24, 240) comportant un côté gingival (66), un côté mésial (60), un côté occlusal (52) et un côté distal (64) et chacun des côtés de base étant aligné avec un côté correspondant des côtés du bracket orthodontique.

5. Système de stockage et de distribution selon l'une quelconque des revendications précédentes, ladite base (34, 202) comprenant un élément de fixation sur le montant (36) et ledit bracket orthodontique (24, 240) étant fixé de manière amovible à l'élément de fixation.

6. Système de stockage et de distribution selon l'une quelconque des revendications précédentes, ladite base (34, 202) comprenant une tige (212) s'étendant depuis le montant (36), ledit bracket orthodontique (24, 240) étant fixé à la tige (212).

7. Système de stockage et de distribution selon la revendication 1, ladite base (34, 202) comprenant une paire de dents (226) qui sont élastiquement déformables et ledit bracket orthodontique (24, 240) étant maintenu en position entre les dents (226).

8. Système de stockage et de distribution selon la revendication 1, ladite base (34, 202) comprenant une paire d'arcades (236) d'un matériau en mousse s'étendant depuis la base (34, 202) et ledit bracket orthodontique (24, 240) étant comprimé entre les arcades (236).

9. Système de stockage et de distribution selon l'une quelconque des revendications précédentes, ledit emballage (22, 200) ou une pluralité d'emballages (22, 200) étant fixés de manière amovible à une bande (26) et ladite bande comprenant une étiquette RFID (38).

10. Système de stockage et de distribution selon la revendication 1, une section transversale de la base (34, 202) étant un polygone irrégulier.

11. Système de stockage et de distribution selon la revendication 1, comprenant en outre une carte de configuration de patient (16) comportant une pluralité de découpes (180) agencées en groupes et un plateau de travail (14) comportant une pluralité de compartiments (148, 150, 156, 160, 162) agencés pour correspondre aux groupes et conçus pour stocker une pluralité de d'emballages (22, 200).

12. Système de stockage et de distribution selon la revendication 11, comprenant en outre une armoire de distribution (12) comportant des secteurs (100, 102, 104, 106) définis par des séparateurs (90, 92,152) qui correspondent aux groupes et sont conçus pour stocker une pluralité d'emballages (22, 200).

13. Système de stockage et de distribution selon la revendication 12, comprenant en outre un emballage (20) dans lequel une pluralité d'emballages (22, 200) sont fixés de manière amovible à une bande (26) et la bande (26) comprend une étiquette RFID (38) et un élément parmi l'armoire de distribution (12) et le plateau de travail (14) comprenant un lecteur RFID (94) configuré pour lire les informations à partir de l'étiquette RFID (38).

14. Système de stockage et de distribution selon la revendication 1, 2, 3, 4, 5, 6, 7, 8 ou 9, chaque élément parmi le capuchon (32) et la base (34, 202) étant des structures rigides qui, lorsqu'elles sont assemblées, forment un enveloppe étanche à la lumière et étanche aux fluides dans laquelle le bracket orthodontique (24, 240) est positionné.
